# FASCICULE DE BREVET EUROPEEN

(11) **EP 3 717 239 B1**
(45) Date de publication et mention de la délivrance du brevet: **08.09.2021**
(21) Numéro de dépôt: 18829899.6
(22) Date de dépôt: 28.11.2018
(51) Int. Cl.: B32B 17/10, B60Q 3/208, B60Q 3/76, G02B 19/00

(54) **TOIT VITRE DE VEHICULE, VEHICULE L'INCORPORANT ET FABRICATION**
FAHRZEUGSONNENDACH, FAHRZEUG DAMIT UND DESSEN HERSTELLUNG
VEHICLE SUNROOF, VEHICLE COMPRISING SAME, AND MANUFACTURING THEREOF

(30) Priorité: 30.11.2017 FR 1761420
(43) Date de publication de la demande: 07.10.2020
(73) Titulaire: SAINT-GOBAIN GLASS FRANCE, 92400 Courbevoie (FR)
(72) Inventeur: BERARD, Mathieu, 75019 Paris (FR); DELRIEU, Olivier, 91360 Epinay Sur Orge (FR); BAUERLE, Pascal, 80500 Davenescourt (FR)
(74) Mandataire: Saint-Gobain Recherche
(86) Numéro de dépôt international: PCT/FR2018/053020
(87) Numéro de publication internationale: WO 2019/106289

(56) Documents cités:
- EP-A1- 2 907 732
- WO-A1-2017/168077
- WO-A1-2017/203171
- WO-A1-2017/203175
- US-A1- 2010 302 794

## Description

L'invention concerne un toit vitré lumineux de véhicule ainsi qu'un véhicule comportant un tel toit et la fabrication d'un tel toit.

Il existe de plus en plus de toits automobiles vitrés, certains capables d'apporter la lumière d'ambiance.

La demande WO2005/018283 propose d'intégrer dans un toit feuilleté un élément électroluminescent muni d'une lentille plane afin de diriger la lumière pour réaliser une liseuse.

Les performances optiques peuvent être améliorées ainsi que le procédé de fabrication.

A cet effet, la présente demande a pour premier objet un toit vitré lumineux de véhicule notamment automobile ou encore de transport en commun comprenant :
- un premier vitrage transparent, en particulier de forme rectangulaire, en verre minéral notamment trempé (thermiquement, ou chimiquement) ou organique, éventuellement clair, extraclair ou de préférence teinté notamment gris ou vert, de préférence bombé, destiné à être le vitrage extérieur, avec des première et deuxième faces principales respectivement dites face F1 (face extérieure du véhicule) et face F2, et pour le véhicule automobile, en particulier vitrage en verre minéral ou organique d'épaisseur de préférence d'au plus 2,5mm, même d'au plus 2,2mm - notamment 1,9mm, 1,8mm, 1,6mm et 1,4mm- ou même d'au plus1,3mm ou d'au plus 1mm, avec une tranche, et une direction dite de référence qui l'horizontale entre l'arrière et l'avant dans le plan du vitrage, (autrement dit la direction de la route), par exemple correspondant à la tranche longitudinale du premier vitrage si la longueur du vitrage entre l'arrière et l'avant de la voiture) ou correspondant à la tranche latérale du premier vitrage si la largeur du vitrage entre l'arrière et l'avant de la voiture)
- un élément électroluminescent côté face F2 et apte à émettre de la lumière polychromatique (de préférence à façon selon les normes) du côté opposé à la face F2 dit côté intérieur, élément électroluminescent ayant une surface de sortie côté intérieur (et une surface d'entrée à l'opposé), avec un demi angle d'émission au sommet de 50° à 70°, notamment 55 à 65°, et une direction d'émission principale normale au plan dudit élément électroluminescent, et même normale au plan (moyen) du vitrage (de préférence 90±5°, 90±2° et même de 90°)
- en regard dudit élément électroluminescent et côté intérieur, une optique de collimation, ayant une face arrière côté surface de sortie et une face avant opposée à la face arrière, (de préférence sur l'élément électroluminescent, par exemple fixé en périphérie, par exemple collé - avec ou sans espaceur- ou soudé ou espacé d'au plus 1mm de l'élément électroluminescent).
Selon l'invention :
- l'élément électroluminescent, notamment transparent, a une surface émettrice de lumière de longueur d'au moins 5cm mieux d'au moins 10cm et de largeur d'au moins 2cm mieux d'au moins 5cm, et de préférence d'épaisseur E0 subcentrimétrique et mieux d'au plus 0,6mm ou submillimétrique en particulier dans un vitrage feuilleté,
- l'élément électroluminescent est de préférence une diode électroluminescente organique dit OLED notamment transparente (TOLED) ou une diode électroluminescente à point quantique dit QLED voire un TFEL (élément électroluminescent à couches minces) moins aisément disponible en lumière blanche
- l'optique de collimation, en matière transparente de préférence plastique (notamment thermoplastique, poly(éthylène téréphtalate) PET, poly(naphtalate d'éthylène) PEN, polyéthylène PE, poly(méthacrylate de méthyle) PMMA, polydiméthylsiloxane PDMS polyamide, polyimide, polycrylate, polyester, polycarbonate, polysulfones, polyéthersulfones, thermoplastique polyuréthane) et/ou même flexible, est de préférence d'épaisseur (totale) E1 submillimétrique, mieux d'au plus 0,3mm ou 0,2mm ou 0,15mm,
- l'optique de collimation comporte, et même est, un film optique de préférence plastique (notamment thermoplastique, PET, PE, PC, PMMA, PDMS); notamment film partiellement texturé dans son épaisseur ou en alternative film composite comportant un support transparent lisse de préférence plastique (comme précité) avec une surcouche transparente -organique et/ou minérale- texturée partiellement ou entièrement en épaisseur ou un ensemble de films optiques, chacun comportant sur une face avant opposée à la surface de sortie (face arrière côté de la surface de sortie) un réseau de motifs avec des sommets S et avec un pas T entre sommets qui est de 10µm à 500µm de préférence avec au moins 4 ou même 10 motifs en regard (vis-à-vis) de la surface de sortie (ou émettrice de lumière).
Selon l'invention, l'optique de collimation comporte ainsi :
a) un premier film optique et de préférence unique, avec sur la face avant ledit réseau de motifs bidimensionnels (côté intérieur, vers la face F3 d'un deuxième vitrage..), notamment un film texturé avec ledit réseau, notamment avec épaisseur submillimétrique et même d'au plus 0,3mm ou 0,2mm ou 0,15mm
b) ou un ensemble d'au moins deux films optiques qui sont prismatiques, de préférence d'au plus deux films optiques prismatiques, comportant dans cet ordre :
   - un premier film optique avec un premier réseau de prismes (motifs prismatiques), notamment un premier film texturé avec ledit premier réseau, s'étendant longitudinalement (suivant leur longueur) suivant un premier axe, notamment avec une épaisseur d'au plus 0,3mm ou 0,2mm ou 0,15mm
   - et en regard du premier film optique (de préférence espacé d'au plus 1mm ou fixé en périphérie par exemple collé - avec ou sans espaceur- ou soudé) un deuxième film optique avec un deuxième réseau de prismes (motifs prismatiques), notamment un film texturé avec ledit deuxième réseau, -croisé avec le premier réseau de motifs prismatiques-, s'étendant longitudinalement suivant un deuxième axe (X) formant un angle avec ledit premier axe de 90±10°, de préférence 90±5°, ou 90±2° et même de 90°, le premier ou le deuxième axe forme avec la direction de référence un angle d'au plus 10°, mieux d'au plus 5° et même d'au plus 2°; et même est parallèle (angle à 0°), notamment avec une épaisseur d'au plus 0,3mm ou 0,2mm ou 0,15mm
c) ou un premier film optique unique avec le premier réseau de prismes (motifs prismatiques), notamment un film texturé avec ledit premier réseau, s'étendant longitudinalement suivant un axe formant un angle d'au plus 10° mieux d'au plus 5° et même d'au plus 2° avec la direction de référence et même parallèle, notamment avec une épaisseur d'au plus 0,3mm ou 0,2mm ou 0,15mm.
Pour b) et c) chaque prisme étant défini par deux faces longitudinales le prisme ayant de préférence une longueur L et une largeur W avec L>2W et mieux L >5W ou L >10W.
Chaque prisme présente un angle au sommet a0 allant de 60 à 110°. Et chaque face longitudinale forme un angle a1, a2 allant de 30 à 55°, mieux de 35° à 50°, même de 40° à 50° et même de 45°±5°, 45°±1 ou de 45° avec le plan du film optique, de préférence a1-a2 est inférieur à 5° et même à 2° (prismes dits symétriques).
En particulier pour b) et c):
- tout ou partie des prismes étant pointus avec les deux faces longitudinales planes et sécantes au sommet S chaque prisme pointu étant défini par l' angle au sommet a0 allant de 60 à 110°, mieux de 70° à 110°, même de 80° à 100° et même de 90°±5°, 90°±2° ou de 90°, chaque face longitudinale forme un angle a1, a2 allant de 30 à 55°, mieux de 35° à 50°, même de 40° à 50° et même de 45°±5°, 45°±1 ° ou de 45° avec le plan du film, de préférence la différence entre lesdits angles (définis par les faces longitudinales) a1-a2 est inférieur à 10°, à 5° et même à 2° (prismes dits symétriques)
- tout ou partie des prismes étant arrondis avec les deux faces longitudinales (chacune courbe ou au moins en partie courbe éventuellement avec une partie plane puis courbe vers le sommet), dans un plan normal P au plan du film et normal audit axe du prisme, l'intersection entre le plan P et chaque prisme arrondi forme une section comportant deux courbes C1, C2 jointives au sommet S, on définit deux droites D1 et D2 passant par les points d'inflexion I1 et I2 des deux courbes C1, C2, chaque droite formant un angle a1, a2 allant de 30 à 55°, mieux de 35° à 50°, même de 40° à 50° et même de 45°±5°, 45°±1 ou de 45° avec le plan du film, et de préférence la différence entre lesdits angles (définies par les droites D1 et D2) a1-a2 est inférieur à 10° , à 5° et même à 2° (prismes dits symétriques)
chaque prisme arrondi étant défini par un cercle tangent au sommet S avec un rayon de courbure R1 compris entre T/10 et T/5 (ces droites D1 et D2 sont sécantes et forme un angle a0 -correspondant à l'angle au sommet - allant de 60 à 110°, mieux de 70° à 110°, même de 80° à 100° et même de 90°±5°,90°±2 ou de 90°).
Pour a) chaque motif bidimensionnel étant défini par un flanc, notamment au moins 3 faces latérales sécantes, le motif bidimensionnel présente de préférence un rapport de forme longueur L sur largeur W supérieur ou égal à 1 et d'au plus 2, même d'au plus 1,5 ou d'au plus 1,1.
Lorsque les prismes sont jointifs on définit des vallées -en pointe ou arrondi- avec les mêmes tolérances sur l'angle dans la vallée que l'angle au sommet déjà décrit et sur le rayon de courbure éventuel dans la vallée.
Pour a), dans un plan P normal au film, le motif bidimensionnel présente un angle a0 allant de 60 à 110°, mieux de 70° à 110°, même de 80° à 100° et même de 90°±5°, 90°±2° ou de 90°, chaque intersection du flanc avec le plan P formant avec le plan du film un angle a1, a2 allant de 30 à 55°, mieux de 35° à 50°, même de 40° à 50° et même de 45°±5°, 45°±1 ou de 45°, de préférence la différence entre lesdits angles (définies par les 2 intersections) a1-a2 est inférieur à 10°, à 5° et même à 2° (motifs dits « symétriques »).
En particulier pour a) :
- tout ou partie des motifs bidimensionnels étant pointus, pour chaque motif bidimensionnel pointu l'intersection entre un plan P normal au film passant par le sommet S et le motif bidimensionnel pointu forme une section triangulaire comportant deux droites D1 et D2 sécantes au sommet S formant l'angle au sommet a0 allant de 60 à 110°, mieux de 70° à 110°, même de 80° à 100° et même de 90°±5°, 90°±2 ou de 90°,
- chaque droite D1, D2 formant avec le plan du film un angle a1, a2 allant de 30 à 55°, mieux de 35° à 50°, même de 40° à 50° et même de 45°±5°, 45°±1 ou de 45° avec le plan du film de préférence la différence entre lesdits angles a1-a2 est inférieur à 10°, à 5° et même à 2° (motifs dits « symétriques »)
- tout ou partie des motifs bidimensionnels étant arrondis pour chaque motif bidimensionnel arrondi l'intersection entre un plan P normal au plan du film passant par le sommet S forme une section comportant deux courbes C1, C2 jointives au sommet S', on définit deux droites D1 et D2 passant par les points d'inflexion I1 et I2 des deux courbes, formant chacune un angle a1, a2 allant de 30 à 55°, mieux de 35° à 50°, même de 40° à 50° et même de 45°±5°, 45°±1 ou de 45° avec le plan du film, et dans ledit plan P chaque prisme arrondi étant défini par un cercle tangent au sommet S avec un rayon de courbure R1 compris entre T/10 et T/5, (ces droites D1 et D2 sont sécantes forment ledit angle au sommet a0 allant de 60 à 110°, mieux de 70° à 110°, même de 80° à 100° et même de 90°±5°, 90°±2 ou de 90°).
En outre, pour conserver la fonction de collimation :
- de l'air est entre la surface de sortie (lisse ou déjà texturée pour favoriser l'extraction de lumière comme un réseau lenticulaire etc) et la face d'entrée (lisse, sans revêtement, sans texturation micrométrique..) du premier film optique de l'optique de collimation,
- en particulier le premier film optique (unique ou l'ensemble des films) étant espacé de la surface de sortie d'au plus 1mm ou fixé en périphérie par exemple par collé - avec ou sans un espaceur-, ou éventuellement est en contact physique (non optique) avec la surface de sortie,
- pour b) et c) de l'air est entre lesdits prismes de la face avant de l'optique de collimation (et même entre les motifs de la face avant du film unique, entre les motifs de la première face avant et entre les motifs de la deuxième face avant), les sommets des motifs de la face avant de l'optique de collimation (face avant du premier film unique, du deuxième film et même du premier film de l'ensemble) étant libres ou en contact physique avec un élément transparent (film optique, film de protection et/ou (bi)fonctionnel, deuxième vitrage d'un vitrage feuilleté..) notamment d'épaisseur de préférence subcentimétrique et même d'au plus 0,5mm ou 0,3mm
- pour a) les motifs bidimensionnels sont en creux, le film comporte un réseau de cavités correspondant aux motifs bidimensionnels (la paroi de chaque cavité formant le flanc notamment les faces latérales sécantes ou le flanc conique), les sommets S sont orientés vers la face F2, et la surface haute de chaque cavité (en particulier définissant le contour de la base) est libre ou en contact physique avec un élément transparent notamment d'épaisseur de préférence subcentimétrique et même d'au plus 0,5mm ou 0,3mm, de l'air est dans les cavités
   ou pour a) les motifs bidimensionnels sont en reliefs, les sommets des motifs de chaque face avant sont libres ou en contact physique avec un élément transparent d'épaisseur subcentimétrique et même d'au plus 0,5mm ou 0,3mm, de l'air est entre les motifs bidimensionnels.

L'optique de collimation permet d'augmenter la lumière et/ou de mieux gérer la lumière par zone de lecture entre passager arrière ou avant.

Le ou les films optiques selon l'invention sont, efficaces, simples à mettre en oeuvre et peuvent être compacts.

Selon l'invention, pour garantir leur efficacité on évite tout matière même transparente (colle, intercalaire de feuilletage...) entre les motifs de chaque film et notamment on crée un gap d'air entre la surface de sortie et la face d'entrée du premier film optique. Une fixation périphérique par exemple une colle peut suffire pour créer ce gap d'air.

Un contact physique (film contre surface de sortie) est toléré mais on préfère une lame d'air (épaisseur mieux contrôlée, moins de risques de zones irisées) par une fixation périphérique (collage de préférence) avec ou sans espaceur.

Selon l'invention, la (même chaque) fixation périphérique est de préférence entièrement hors (décalée, donc périphérique) de la surface émettrice de lumière. La largeur de la fixation peut être d'au plus 5mm.

Voici les chiffres des gains de luminance (dans la direction normale à la surface) observés avec un élément électroluminescent qui un OLED recouverte d'un ou deux films prismatiques comparée à un film prismatique avec une colle optique à l'OLED :
- un film optique unique selon b) avec un gap d'air : +40%
- deux films optiques croisés selon c) avec gap d'air : +64%
- un film optique avec une colle optique (contre exemple): +6%.

L'élément électroluminescent est de préférence une source (quasi) lambertienne. C'est une source étendue par opposition aux sources de type ponctuelles telles que des diodes électroluminescentes inorganiques dites DEL (ou LED en anglais).

Pour une fonction de liseuse on préfère fixer une longueur et une largeur minimum à l'élément électroluminescent.

L'élément électroluminescent comme OLED ou QLED peut avoir collé sur sa surface de sortie déjà un film avec un réseau lenticulaire ou équivalent pour extraire la lumière (souvent appelé EEL pour 'external extraction layer' en anglais) ou une surface de sortie texturée à cet effet.

La surface de l'élément électroluminescent peut être de forme quelconque : polygonale, carrée, rectangulaire ou ronde. De préférence la surface émettrice de lumière est une surface active unique ou est un ensemble de surfaces actives élémentaires de préférence de longueur au moins 1 ou 2cm agencées, espacées pour produire une lumière homogène par exemple sur une bande rectangulaire ou carrée. La surface active unique est de préférence rectangulaire ou carré. Les surfaces actives élémentaires sont de préférence carrées ou rectangulaires.

On préfère des motifs pointus avec des faces planes mais un défaut de fabrication peut conduire à des motifs ondulés (flanc courbe et sommet arrondi). Ces motifs sont acceptables tels que délimités selon l'invention.

Naturellement on préfère pour b) ou c) former un ensemble de motifs prismatiques unidimensionnels suivant l'axe longitudinal. Si par des raisons de fabrication le prisme unidimensionnel est divisé en morceaux dans le sens de la longueur alors les morceaux sont espacés d'une distance inférieure à <5L mieux à 10L ou à 20L.

Les motifs (prismes ou bidimensionnels) sont le plus proche possible les uns des autres, et ont par exemple leurs bases distantes de moins de 1mm, et de préférence de moins de 0,5mm.

De manière encore préférée, les motifs prismes ou bidimensionnels sont jointifs ou essentiellement jointifs.

Des motifs sont dit jointifs lorsqu'ils se touchent en au moins une partie de leur surface. On préfère que les motifs soient jointifs car ainsi ils sont plus nombreux, efficaces. Par exemple pour chaque film prismatique on a un ensemble de motifs prismatiques unidimensionnels suivant l'axe longitudinal et jointifs par leurs bases.

Certains motifs bidimensionnels ne permettent pas une jonction totale entre les motifs. C'est notamment le cas lorsque si les bases sont de cercles même se touchant, il reste une certaine surface entre les cercles n'appartenant pas aux motifs. Par jonction totale, on entend le fait que le contour de la base d'un motif fait également entièrement partie des contours de ses motifs voisins.

Certains motifs peuvent être totalement jointifs, de sorte que l'intégralité de la surface (au moins celle fonctionnelle en regard de l'élément électroluminescent) du film optique fasse partie d'au moins un motif. Il s'agit de motif de pavage. En particulier, des motifs bidimensionnels à base carrée ou rectangulaire ou hexagonale peuvent être totalement jointifs si elles les bases sont identiques. Dans le cas de bases carrées ou rectangulaires, il convient également que lesdites bases soient alignées pour que les motifs soient totalement jointifs. Dans le cas de bases hexagonales, il convient que lesdites bases forment un nid d'abeille.

Chaque film transparent texturé couvrant l'élément électroluminescent (de préférence l'OLED ou QLED) peut être texturé par région, donc porteur d'une ou des régions texturées, en vis-à-vis d'un élément électroluminescent (OLED ou QLED) ou de plusieurs élément électroluminescent (OLED ou QLED) et les régions adjacentes (décalés de l'OLED ou QLED) sont lisses (pour laisser de la transparence).

On préfère que l'optique de collimation ne dépasse pas de la tranche du premier vitrage.

Lorsque le toit comporte plusieurs éléments électroluminescents comme OLED ou QLED il peut comporter de préférence une optique de collimation par élément électroluminescent (tel que OLED ou QLED) ou une optique de collimation commune pour plusieurs éléments électroluminescent comme OLED ou QLED). On préfère que l'optique de collimation soit le plus locale possible car elle génère du flou. En cas d'optique de collimation commune le ou les films optiques peuvent être lisses entre les éléments électroluminescents ou avec les motifs mais sur largeur réduite du ou des films par exemple d'au plus 5cm et même 1cm.

De préférence pour les films optiques selon l'invention, il s'agit de préférence de motifs répétitifs, c'est-à-dire des motifs géométriques ayant sensiblement la même forme et placés sensiblement à égale distance les uns des autres et même sensiblement de même hauteur.

Bien entendu, la forme de la zone couverte par l'optique de collimation est indépendante de la forme des motifs.

Le motif bidimensionnel peut donc être :
- motif en relief, donc plein, par exemple avec une surface conique ou pyramidal, notamment des faces latérales sécantes séparées par des arêtes latérales,
- motif en creux (autrement dit inversé), le film est texturé avec un réseau de cavités la ou les parois de chaque cavité formant les faces latérales pyramidales ou le flanc conique, le sommet est orienté vers la face F2 et la surface haute de la cavité définissant le contour de la base.

Les motifs bidimensionnels se terminent par exemple en pointe, comme c'est le cas pour un cône ou une pyramide.

De préférence, le motif bidimensionnel présente des faces (latérales) planes et sécantes d'une pyramide. Si le motif bidimensionnel est une pyramide régulière, la base (comprise dans le plan général de la face texturée du film) est un triangle équilatéral.

Un cône classique ne présente pas de surface plane sur son flanc.

Les motifs ont de préférence pour dimension environ de 10µm à 500 µm et mieux entre 100 et 300 µm, de préférence d'au moins 50µm.

La hauteur de chaque film optique (optique de collimation) peut être comprise entre 6 ou 60 µm et 1 mm, de préférence entre 10 µm et 500µm, en particulier entre 20 et 300µm, de préférence d'au moins 50µm et même d'au plus 300 ou 200µm.

Chaque film optique a en entrée une faible rugosité de façon à éviter toute diffusion. Indépendamment de la rugosité, on peut définir une hauteur ou profondeur de motif (de texturation) qui est égale à la distance entre le point le plus haut et le plus bas d'un motif.

Le film optique transparent peut être un film en matière plastique (polymère organique), notamment thermoplastique, de préférence en polyester, en poly(éthylène téréphtalate) PET, polyéthylène PE polycarbonate PC, poly(méthacrylate de méthyle) PMMA, polystyrène, polyamide, polydiméthylsiloxane PDMS, poly(naphtalate d'éthylène) PEN, polyimide, polycrylates, polysulfones, polyéthersulfones, (thermoplastique) polyuréthane.

Le film optique transparent est de préférence flexible pour s'adapter à la ou aux courbures du vitrage (monolithique ou feuilleté) si bombé.

Le film optique peut comprendre un film plastique avec en surface une couche transparente avec lesdits motifs, texturée entièrement ou partiellement dans épaisseur.

De préférence chaque film optique est un film plastique (monolithique) qui présente une texturation partielle dans son épaisseur, autrement dit avec une épaisseur constante entre la face lisse en entrée et le point le plus proche de la face texturée avant (côté intérieur). De préférence on définit l'épaisseur restante (constante) du film comme la distance entre le point le plus bas entre la face texturée avant et la face arrière. L'épaisseur restante est au moins 50µm et même d'au plus 200µm.

La texturation peut être réalisée par laminage («cast» en anglais), thermoformage, gravure, notamment une gravure au laser pour un matériau polymère. Suivant la forme de la texturation visée, la fabrication peut ne pas forcément mener à des formes géométriques parfaites : sommet ou vallée arrondis etc.

L'optique de collimation selon a) ou c) peut être un premier film transparent texturé.

L'optique de collimation selon c) peut être un premier film transparent texturé et un deuxième film transparent texturé croisé.

De préférence concernant l'optique de collimation, on préfère les caractéristiques suivantes de préférence cumulatives :
- le ou chaque film optique est un film plastique partiellement texturé dans son épaisseur
- pour a) les motifs bidimensionnels sont en creux, notamment film plastique partiellement texturé dans son épaisseur, les motifs bidimensionnels ont une base rectangulaire, carré ou circulaire et de préférence avec une hauteur H avec une dispersion d'au plus 10%, en particulier les motifs sont (quasi) de même hauteur donc avec des surfaces hautes dans un même plan
- pour a), b) ou c) l'angle a0 est de 90°±2° et même l'angle a1 et/ou a2 est de 45°±2°.
L'élément électroluminescent et son optique de collimation forme une liseuse.

La liseuse peut être placée au- dessus de l'emplacement de l'habitacle à éclairer ou il peut être nécessaire ou souhaiter placer la liseuse adjacente, décalée de l'emplacement.

Aussi dans un mode de réalisation, le toit comprend en outre en regard de l'optique de collimation, de préférence sur la face avant de l'optique de collimation (fixée en périphérie, par exemple collée ou soudée ou espacée d'au plus 1mm) une optique de redirection, l'optique de collimation est entre l'élément électroluminescent et l'optique de redirection, en matière transparente de préférence plastique (notamment thermoplastique, polyester, PET, polyéthélène PE polycarbonate PC), qui est de préférence d'épaisseur E'1 submillimétrique, comporte un film optique de redirection ou un ensemble de films optiques de redirection chacun comportant un réseau de prismes assymétriques avec des sommets et avec un pas T' entre sommets qui est de 10µm à 500µm, de préférence avec au moins 4 ou même 10 motifs en regard de la surface de sortie (ou émettrice de lumière), l'optique de redirection comporte ainsi de préférence:
i) un premier film optique qui est prismatique assymétrique avec sur une face principale opposée à la surface de sortie dite face avant finale, ledit réseau de prismes assymétriques s'étendant longitudinalement suivant un troisième axe formant un angle d'au plus 10°, au plus 5° ou au plus 2° avec ledit premier axe et même parallèle et/ou avec la direction de référence du vitrage (l'horizontale entre l'avant et l'arrière) et même est parallèle, notamment avec une épaisseur submillimétrique et même d'au plus 0,3mm ou 0,2mm ou 0,15mm
j) ou un ensemble de deux films optiques qui sont prismatiques assymétriques, comportant dans cet ordre en s'éloignant de la surface de sortie:
   - un premier film optique assymétrique avec sur une face principale opposée à la surface de sortie (dite face intermédiaire) un réseau de prismes assymétriques, s'étendant longitudinalement suivant un troisième axe, notamment avec une épaisseur submillimétrique et même d'au plus 0,3mm ou 0,2mm ou 0,15mm
   - et en regard du premier film optique assymétrique (de préférence espacé d'au plus 1mm ou fixé en périphérie par exemple collé ou soudé) un deuxième film optique notamment avec une épaisseur submillimétrique et même d'au plus 0,3mm ou 0,2mm ou 0,15mm, avec sur une face principale opposée à la surface de sortie dite face avant finale, avec un deuxième réseau de motifs prismatiques -croisé avec le premier réseau de motifs prismatiques-, s'étendant longitudinalement suivant un quatrième axe (X) formant un angle avec ledit troisième axe d'au plus 10°, de préférence d'au plus 5°, au plus 2° et même de 0° (parallèle, le troisième et le quatrième axe forme chacun un angle avec la direction de référence (et même le premier axe), d'au plus 10°, d'au plus 5° ou au plus 2° (ou 0°).
Pour i) et j) chaque prisme assymétrique étant défini par des première et deuxième faces longitudinales, le prisme ayant de préférence une longueur L et une largeur W avec L>2W et mieux >5W ou >10W.

Chaque prisme assymétrique présente un angle au sommet a'0 allant de 50 à 60° mieux 55°±5°, 55°±2° et la première face longitudinale (dit grand côté) forme avec le plan du film un premier angle a3, allant de 31 à 41° mieux de 35°±5°, 35°±2° (naturellement la deuxième face longitudinale (dit petit côté) forme avec le plan du film un deuxième angle a4, allant de 79 à 99° mieux de 85 à 90°, 88 à 90° de préférence d'au plus 90°. De préférence la différence entre a4-a3 est supérieure à 40° et même à 50°.

En particulier pour i) et j) :
- tout ou partie des prismes assymétriques étant pointus avec les deux faces longitudinales planes et sécantes au sommet S1 chaque prisme pointu étant défini par ledit angle au sommet a'0
- tout ou partie des prismes a(s)symétriques étant arrondis avec les deux faces longitudinales (chacune courbe ou au moins en partie courbe éventuellement avec une partie plane puis courbe vers le sommet), dans un plan normal P au plan du film et normal audit axe du prisme, l'intersection entre le plan P et chaque prisme arrondi forme une section comportant deux courbes C'1, C'2 jointives au sommet S1,
   on définit des premier et deuxième droites D'1 et D'2 passant par les points d'inflexion I'1 et I'2 des deux courbes C'1, C'2,
- une première droite D'1 formant ledit angle a3 avec le plan du film optique de redirection,
- une deuxième droite D'2 formant ledit angle a4 avec le plan du film optique de redirection
chaque prisme assymétrique arrondi étant défini par un cercle tangent au sommet S1 avec un rayon de courbure R1 compris entre T'/10 et T'/5 (ces droites D'1 et D'2 sont sécantes et forme ledit angle au sommet a '0).

Lorsque les prismes assymétriques sont jointifs on définit des vallées -en pointe ou arrondi- avec les mêmes tolérances sur l'angle dans la vallée que l'angle au sommet déjà décrit et sur le rayon de courbure éventuel dans la vallée.

En outre la normale au grand côté dirigée vers le côté intérieur et orientée à façon vers le côté opposé à la déviation souhaitée.

L'ensemble optique de collimation et éventuelle optique de redirection prismatique selon l'invention fonctionne de la même façon pour tout le visible contrairement à un film holographique qui va générer des irisations.

De préférence concernant l'élément électroluminescent, on préfère les caractéristiques suivantes de préférence cumulatives :
- l'élément électroluminescent est une diode électroluminescente organique dit OLED notamment transparent (TOLED) ou une diode électroluminescente à point quantique dit QLED
- l'élément électroluminescent, notamment OLED ou QLED, est transparent, et présente une transmission lumineuse d'au moins 20% et même d'au moins 50%.
- l'élément électroluminescent est un OLED qui est à émission par l'arrière comportant un support (transparent ou opaque ou avec une couche opaque) qui porte côté face F2 dans cet ordre en s'éloignant du support : une sous couche fonctionnelle éventuelle, une anode transparente, un système électroluminescent organique, une cathode réfléchissante, notamment avec sur la surface côté face F2, et même un ou des bords sombres adjacents à la surface lumineuse (par exemple techniques, pour l'alimentation électrique) par exemple de largeur subcentimétrique d'au plus 1cm même d'au plus 5mm ou 1mm, l'optique de collimation étant fixée (collée voire soudée etc) de préférence au moins en partie en regard des bords techniques.

L'OLED peut comprendre aussi une couche d'encapsulation couvrant l'ensemble (la surface active) : résine par exemple transparente ou encore film plastique adhésivé, ce film plastique muni de zones électroconductrices peut servir pour la connexion électrique.

L'élément électroluminescent peut être masqué de l'extérieur par une couche de masquage (émail etc) en face F1 ou F2. L'élément électroluminescent sur une couche de masquage interne en face F2 . L'élément électroluminescent peut être opaque

L'optique de collimation (voire de redirection) dans un feuilleté peut être contre la face F3 sans fixation (collage etc)

De préférence l'ensemble de films optiques a une épaisseur d'au plus 1mm ou d'au plus 0,6mm et même l'ensemble l'élément électroluminescent et films optiques a une épaisseur d'au plus 1mm ou d'au plus 0,6mm.

Le toit peut comprendre un vitrage feuilleté comportant :
- ledit premier vitrage (transparent),
- un deuxième vitrage (transparent), en verre minéral ou même organique, de préférence bombé et de préférence clair ou extraclair voire teinté (moins que le premier vitrage), vitrage destiné à être le vitrage intérieur, avec des troisième et quatrième faces principales respectivement face F3 et face F4, pour le véhicule automobile, d'épaisseur de préférence inférieure à celle du premier vitrage, même d'au plus 2mm - notamment 1,9mm, 1,8mm, 1,6mm et 1,4mm- ou même d'au plus 1,3mm ou de moins de 1,1mm ou encore de moins de 0,7mm notamment d'au moins 0,2mm, l'épaisseur totale des premier et deuxième vitrages étant de préférence strictement inférieure à 4mm, même à 3,7mm, le deuxième vitrage pouvant être trempé chimiquement
- entre les faces F2 et F3 qui sont les faces internes du vitrage feuilleté un intercalaire de feuilletage transparent, éventuellement clair, extraclair ou même teinté notamment gris ou vert (partiellement teinté dans son épaisseur si multifeuillet par exemple), en matière polymérique de préférence thermoplastique et mieux encore en polyvinylbutyral (PVB), intercalaire de feuilletage (feuillet unique, feuillet composite) ayant une face principale FA côté face F2 et une face principale FB côté face F3.

Dans une région décalée, notamment adjacente, de l'élément électroluminescent, notamment OLED ou QLED, et par exemple région couvrant au moins 50% et même 80% ou 90% de la surface du toit) la face FA est en contact adhésif avec la face F2 (nue ou revêtue d'un revêtement) et la face FB est en contact adhésif avec la face F3 (nue ou revêtue d'un revêtement) notamment OLED ou QLED notamment l'élément électroluminescent notamment l'élément électroluminescent notamment OLED ou QLED étant entre les faces F2 ou F3 et de préférence l'optique de collimation et l'optique de redirection assymétrique entre les faces F2 ou F3 ou l'élément électroluminescent notamment OLED ou QLED sur la face F4 et de préférence l'optique de redirection assymétrique est coté face F4 ou de préférence l'optique de collimation et l'optique de redirection assymétrique sont côté face F4

L'intercalaire de feuilletage est d'épaisseur E_{A}, notamment entre la face FA et FB, -qui pour le véhicule automobile- est de préférence d'au plus 1,8mm, mieux d'au plus 1,2mm et même d'au plus 0,9mm (et mieux d'au moins 0,3mm et même d'au moins 0,6mm), notamment en retrait du chant du premier vitrage d'au plus 2mm et notamment en retrait du chant du deuxième vitrage d'au plus 2mm, notamment étant un premier feuillet acoustique et/ou teinté.

L'intercalaire de feuilletage formé à partir d'un ou plusieurs feuillets - un entre la face FA et FB et/ou feuillet en face arrière et/ou encore feuillet entre la face FB et la face F3- peut être de préférence en polyvinylbutyral (PVB), ou encore en polyuréthane (PU), en copolymère éthylène/acétate de vinyle (EVA), ayant par exemple une épaisseur entre 0,2mm et 1,1mm. L'intercalaire de feuilletage peut être éventuellement composite dans son épaisseur comme détaillé plus tard (PVB/film plastique tel que polyester, PET etc/PVB).

On peut choisir un PVB classique comme le RC41 de Solutia ou d'Eastman.

L'intercalaire de feuilletage (feuillet central et/ou feuillet arrière et/ou feuillet avant)-peut comprendre au moins une couche dite centrale en matériau plastique viscoélastique aux propriétés d'amortissement vibro-acoustique notamment à base de polyvinylbutyral (PVB) et de plastifiant, et l'intercalaire, et comprenant en outre deux couches externes en PVB standard, la couche centrale étant entre les deux couches externes. Comme exemple de feuillet acoustique on peut citer le brevet EP0844075. On peut citer les PVB acoustiques décrits dans les demandes de brevet WO2012/025685, WO2013/175101, notamment teinté comme dans le WO2015079159.

L'intercalaire de feuilletage (feuillet central et/ou feuillet arrière et/ou feuillet avant) peut comporter un PVB acoustique et/ou est (un PVB) teinté, notamment l'intercalaire de feuilletage notamment est un PVB au moins teinté partiellement dans son épaisseur. La partie teintée peut être au moins (et même au plus) entre l'élément électroluminescent (OLED, QLED..) et la face F2.

Un vitrage feuilleté selon l'invention peut être avec :
- le premier vitrage en verre minéral, le deuxième vitrage en verre minéral par exemple plus mince
- le premier vitrage en verre minéral, le deuxième vitrage en verre organique par exemple plus mince (PET, PC, PMMA etc) éventuellement avec une surcouche de protection en face F4 ('hard coat').

L'optique de collimation et/ou l'éventuelle optique de redirection peut être sur la face F4 tandis que l'élément électroluminescent (OLED, QLED..) est entre la face F2 et F3. Autrement, l'optique de collimation est avec l'élément électroluminescent dans le feuilleté ou sur la face F4 et l'éventuelle optique de redirection sur la face F4 ou l'optique de collimation et l'éventuelle optique de redirection est avec l'élément électroluminescent dans le feuilleté ou sur la face F4.

L'élément électroluminescent (OLED, QLED..) seul ou avec l'optique de collimation peut avoir une épaisseur E0 trop importante pour être feuilleté, via un feuillet intercalaire ou entre deux feuillets intercalaires.

En particulier l'élément électroluminescent (OLED, QLED..)peut être logé dans une ouverture de l'intercalaire de feuilletage et même l'optique de collimation est logée dans ladite ouverture (et même fixée par exemple collée à l'élément électroluminescent), l'ouverture est borgne avec un fond en direction de la face F2 et débouchante sur la face F3, ou l'ouverture dite interne est dans l'épaisseur de l'intercalaire de feuilletage et ledit élément transparent est un film de protection (éventuellement fonctionnel : avec une couche électroconductrice, chauffante, de contrôle solaire ou basse émissivité «low E», et/ou formant interrupteur tactile capacitif pour allumer l'élément électroluminescent), logé dans ladite ouverture interne ou plus large que ladite ouverture interne et couvrant ladite ouverture interne

L'ouverture est utile en particulier lorsque E0 (ou E0+E1 si optique de collimation logée) est supérieure à 0,15mm. L'ouverture de l'intercalaire de feuilletage facilite la mise en place, l'intégration et améliore les performances.

Contre toute attente dans le cas d'une ouverture débouchante l'intercalaire ne flue pas assez pour gêner le fonctionnement de l'optique de collimation. En particulier, la mise sous vide vient plaquer l'optique de collimation contre la face F3.

De préférence, l'élément électroluminescent (OLED, QLED..) et l'optique de collimation sont dans des ouvertures (de préférence) d'un PVB ou d'un PVB/film fonctionnel avec un éventuel revêtement fonctionnel/PVB.

De préférence, le toit présente l'une au moins des caractéristiques suivantes :
- l'ouverture est dans une épaisseur de PVB (un ou plusieurs feuillets, avec interface discernable notamment)
- l'ouverture est dans un intercalaire de feuilletage acoustique, en particulier tricouche ou quadricouche
- l'ouverture est dans un intercalaire de feuilletage teinté
- l'ouverture est dans une matière composite (multifeuillets) : PVB/film plastique transparent ou encore PVB/film plastique transparent/PVB, ledit film plastique, notamment un polyester, un PET, d'épaisseur submillimétrique et même d'au plus 0,2mm, ou d'au plus 0,1mm étant porteur d'un revêtement fonctionnel :basse émissivité ou de contrôle solaire et/ou encore chauffant.

Naturellement, l'intercalaire de feuilletage (un feuillet de PVB) peut être en contact direct avec la face F3 ou avec un revêtement fonctionnel classique sur cette face, notamment un empilement de couches minces (incluant une ou des couches argent) tel que : couche chauffante, antennes, couche de contrôle solaire ou basse émissivité ou une couche décor ou de masquage (opaque) comme un émail généralement noir.

Naturellement, l'intercalaire de feuilletage (un feuillet de PVB) peut être en contact direct avec la face F2 ou avec un revêtement fonctionnel classique sur cette face, notamment un empilement de couches minces (incluant une ou des couches argent) tel que : couche chauffante, antennes, couche de contrôle solaire ou basse émissivité ou une couche décor ou de masquage (opaque) comme un émail généralement noir.

Le verre de préférence interne dans un vitrage feuilleté, notamment mince d'épaisseur de moins de 1,1mm, est de préférence trempé chimiquement. Il est de préférence clair On peut citer les exemples des demandes WO2015/031594 ou WO2015066201.

De préférence concernant la fixation de l'optique de collimation, on préfère les solutions suivantes:
- l'optique de collimation est fixée (et de préférence collée ou encore soudée etc) à l'élément électroluminescent (OLED, QLED..), via sa face arrière, notamment par un adhésif (colle, adhésif double face) de préférence transparent (en périphérie de la surface de sortie,
   et/ou l'optique de collimation est fixée et de préférence collée ou encore soudée etc) à l'élément transparent (film de protection, deuxième vitrage etc), notamment par un adhésif (colle, adhésif double face) de préférence transparent en périphérie de la face avant
   ou
- dans le cas du vitrage feuilleté déjà décrit, l'optique de collimation est plus large que l'élément électroluminescent (OLED, QLED..) et est fixé en périphérie (de préférence collé ou encore soudée etc) notamment par un adhésif de préférence transparent ou même en périphérie est en contact adhésif (sans apport de matière) via sa face arrière audit intercalaire de feuilletage (feuillet central, en particulier PVB).

On préfère un adhésif (colle, adhésif double face) transparent si l'adhésif est dans le clair de vitre. On peut choisir un autre moyen de fixation comme une soudure (formant un contact adhésif local sans apport de matière).
Le collage (colle, double face) entre optique de collimation et surface de sortie et/ou entre films optique voire entre film optique et film de protection peut être en cadre et former un scellement.

Dans le cas de plusieurs films optiques (cas b) avec les deux films prismatiques croisés, les films optiques peuvent être fixés entre eux en périphérie par exemple collés de notamment par un adhésif (colle, adhésif double face) de préférence transparent ou simplement l'un contre l'autre (contact par les sommets d'un film sur l'arrière de l'autre film).

Dans un exemple d'un vitrage feuilleté, l'optique de collimation est entre la face F2 et F3, l'élément électroluminescent (OLED, QLED..) est entre la face F2 et F3 et dans la zone avec l'élément électroluminescent, la face FA est en contact adhésif avec la face F2 et éventuellement la face FB en contact adhésif avec la surface d'entrée, l'élément transparent étant le deuxième vitrage (nu ou revêtu)

Dans un exemple d'un vitrage feuilleté, l'optique de collimation est entre la face F2 et F3, l'élément électroluminescent (OLED, QLED..) est entre la face F2 et F3 et dans la zone avec l'élément électroluminescent la face FA en contact adhésif avec la face F2 ou du côté de la surface de sortie (intercalaire de feuilletage avant), et la face FB en contact adhésif avec la face F3 et l'élément transparent est un film de protection plastique notamment polyester, notamment PET, PC) par exemple d'épaisseur E4 submillimétrique, sur la face avant, avec une face (F6) orientée vers la face F3 et en contact adhésif avec l'intercalaire de feuilletage (et avec une face (F5) orientée vers la face F2 contre la face avant en laissant l'air dans les cavités ou entre les motifs -en reliefs-).

Le film de protection plastique est local éventuellement avec une zone dite extension dépassant des bords de la face avant (de l'optique de collimation) d'au plus 10cm, même d'au plus 5cm ou 1cm, notamment avec l'extension en contact adhésif avec l'intercalaire de feuilletage.

Le film de protection transparent (local ou couvrant) peut être un film en matière plastique (polymère organique), notamment thermoplastique, de préférence en polyester, en poly(éthylène téréphtalate) PET, polyéthylène PE polycarbonate PC, poly(méthacrylate de méthyle) PMMA, polystyrène, polyamide, polydiméthylsiloxane PDMS, poly(naphtalate d'éthylène) PEN, polyimide, polycrylate, polysulfone, polyéthersulfone, (thermoplastique) polyuréthane. Il est par exemple de même matière que le film de collimation et/ou de redirection.

L'intercalaire de feuilletage peut être composite et comporte l'empilement suivant hors de zone de l'élément électroluminescent (OLED, QLED..): PVB/film plastique fonctionnel notamment polyester, PET (et autres précités) avec un éventuel revêtement fonctionnel électroconducteur côté face F2 ou F3 /PVB, le film plastique fonctionnel de préférence d'épaisseur E'4 submillimétrique s'étendant sur la face F2, et l'élément électroluminescent (OLED, QLED..) est entre la face F2 et F3, entre la face avant et la face F3 est présent ledit film plastique/ledit PVB, l'élément transparent est le film plastique fonctionnel sur la face avant.

Le film de protection local par exemple couvrir au plus 20% ou au plus 10% ou 5% de la surface du vitrage. En particulier, l'optique de collimation et le film avant, de protection peuvent être de même taille (et de même taille que l'élément électroluminescent (OLED, QLED..) ou en retrait de la tranche couvrant au moins la surface active)) ou la surface du film avant de protection est plus grande et de préférence ne dépasse pas de la tranche de l'optique de collimation de plus de 10 cm ou même de plus 5cm ou de plus 1cm.

Alternativement, le film (avant) de protection peut couvrir au moins 30%, 50%, 80%, ou 90% de la face F2 ou par exemple être en retrait d'au plus 5 cm et même d'au plus 1cm ou d'au plus 5mm de la tranche du premier vitrage. De préférence il est porteur d'un revêtement fonctionnel basse émissivité ou de contrôle solaire et/ou encore chauffant notamment couvrant au moins 80% ou 90% de la face F2.

Le film avant de protection peut être fonctionnel : avec une couche électroconductrice, fonctionnelle : chauffante, de contrôle solaire ou low E, et/ou formant interrupteur tactile capacitif pour allumer l'élément électroluminescent (OLED, QLED...). Le film local de protection peut être clair ou extraclair.
Le film local de protection peut être fonctionnel : avec une couche électroconductrice, fonctionnel notamment formant interrupteur tactile capacitif pour allumer l'élément électroluminescent (OLED, QLED..). Le film local de protection peut être clair ou extraclair.

Concernant la localisation de l'élément électroluminescent (OLED, QLED..) et de son optique de collimation) :
- la face F2 peut être libre, le toit vitré est monolithique par exemple en verre, PMMA, PC, l'élément électroluminescent est sur la face F2 (et l'optique de collimation sur ou espacé de l'élément électroluminescent) ou si le vitrage est feuilleté et l'élément électroluminescent est sur la face F4 libre,
- l'optique de collimation est fixée en périphérie notamment collée à l'élément électroluminescent) en périphérie de la surface de sortie, via sa face arrière, notamment par un adhésif de préférence transparent (colle, adhésif double face) et/ou l'ensemble élément électroluminescent / optique de collimation est fixée en périphérie notamment collée de préférence par un adhésif de préférence transparent (colle, adhésif double face) à la face libre F4 ou F2 via un film avant de protection (collant etc) qui est ledit élément transparent avec une partie dépassante de fixation sur la face libre F4 ou F2
- et/ou l'élément électroluminescent est fixé, de préférence collé, par sa surface d'entrée à la face libre F4 ou F2 (et l'optique de collimation sur ou espacé de l'élément électroluminescent).

Le film avant de protection peut avoir une autre fonction. Il peut être teinté, et/ou porteur d'un revêtement électroconducteur (contrôle solaire, low E etc) notamment couvrant au moins 80% ou 90%.
Le film avant de protection notamment couvrant au moins 80% ou 90% de la face F2 peut être composite par un PET avec une surcouche de protection (dite «hard coat»).

Le film avant de protection transparent (local ou couvrant) peut être un film en matière plastique (polymère organique), notamment thermoplastique, de préférence en polyester, en poly(éthylène téréphtalate) PET, polyéthylène PE polycarbonate PC, poly(méthacrylate de méthyle) PMMA, polystyrène, polyamide, polydiméthylsiloxane PDMS, poly(naphtalate d'éthylène) PEN, polyimide, polycrylate, polysulfone, polyéthersulfone, (thermoplastique) polyuréthane. Il est par exemple de même matière que le film de collimation et/ou de redirection.

De préférence l'épaisseur de l'ensemble optique de collimation et même éventuelle optique de redirection est d'au plus 1mm même 0,9mm ou 0,6mm.

Dans le cas de la fixation sur une face libre F2 ou F4, pour éviter une surépaisseur sur la face libre F2 ou F4, E0 est d'au plus 1mm et même d'au plus 0,5mm.

De préférence lorsque l'élément électroluminescent (OLED, QLED..) est entre les faces F2 et F3, pour éviter une surépaisseur d'intercalaire de feuilletage, E0 est d'au plus 1mm et même d'au plus 0,5mm.

Quelle que soit la localisation (sur face F2 ou F4 libre ou entre F2 et F3 d'un vitrage feuilleté) l'élément électroluminescent (OLED, QLED...) peut être local par exemple couvrir au plus 20% ou au plus 10% ou même d'au plus 5% de la surface du vitrage et/ou l'optique de collimation peut être locale par exemple couvrir au plus 20% ou au plus 10% ou 5% de la surface du vitrage. En particulier, l'élément électroluminescent (OLED, QLED..), l'optique de collimation, peuvent être de même taille ou en retrait de la tranche (couvrant au moins la surface active) ou la surface de l'Optique de collimation est plus grande et de préférence ne dépasse pas de la tranche de l'élément électroluminescent (OLED, QLED..) de plus de 10cm même de plus 5 ou de plus 1cm.

Le film (avant) de protection peut être local par exemple couvrir au plus 20% ou au plus 10% ou 5% de la surface du vitrage. En particulier, l'optique de collimation et le film avant, peuvent être de même taille (et de même taille que l'élément électroluminescent ou en retrait de la tranche couvrant au moins la surface active)) ou la surface du film avant est plus grande et de préférence ne dépasse pas de la tranche de l'optique de collimation de plus de 10cm même de plus 5 ou de plus 1cm.

Alternativement, le film de protection avant peut couvrir au moins 30%, 50%, 60%, 90% de la face F2 (par exemple en retrait d'au plus de 10cm même d'au plus 5 ou 1cm de la tranche du premier vitrage). Par exemple il est porteur d'un revêtement fonctionnel basse émissivité ou de contrôle solaire et/ou encore chauffant.

Un élément de connexion électrique dudit élément électroluminescent peut être lié audit élément électroluminescent et dépasser de la tranche du vitrage.

Un élément de connexion électrique de préférence flexible peut être fixé (collé, soudé etc) ou plaqué contre l'élément électroluminescent (OLED, QLED..), de préférence l'élément de connexion électrique dépasse de la tranche du toit vitré. Il est par exemple d'épaisseur E'0 qui est d'au plus 0,2mm ou d'au plus 0,15mm et même d'au plus 0,1mm.

L'élément de connexion électrique (bande ou fils) peut être lié à l'élément électroluminescent (OLED, QLED..) dans une (ou plusieurs) zone périphérique de la surface de sortie ou d'entrée.

Dans un mode de réalisation, l'élément de connexion électrique est un ensemble de deux fils métalliques ou de bandes métalliques.

Dans un mode de réalisation, l'élément de connexion électrique est une bande (connecteur plat) qui comporte un film en matière plastique de préférence transparent, de préférence en polyester, poly(éthylène téréphtalate) ou PET ou en polyimide, pourvue de pistes conductrices, notamment métalliques (cuivre etc) ou en oxyde conducteur transparent.

Les pistes conductrices sont imprimées ou déposées par toute autre méthode de dépôt par exemple dépôt physique en phase vapeur. Les pistes conductrices peuvent aussi être des fils. On préfère que les pistes conductrices et le film soient transparents lorsqu'ils sont visibles c'est-à-dire qu'ils ne sont pas masquées par un élément (couche) de masquage (tel qu'un émail voire une peinture etc) notamment en face F4 ou F3. Les pistes conductrices peuvent être transparentes de par la matière transparente ou par leur largeur suffisamment fine pour être (quasi) invisibles.

Des films de polyimide ont une tenue en la température plus élevée par rapport à l'alternative PET ou même PEN (poly(naphtalate d'éthylène).

L'élément de connexion électrique peut être (tout ou partie) dans le clair de vitre, espacée ou non des bandes périphériques opaques (même formant cadre opaque) comme un émail de masquage (noir, foncé etc). Le plus souvent, il y a une couche opaque en face F2 et si feuilleté une couche opaque en face F4 voire F3. Leurs largeurs sont identiques ou distinctes.

La largeur Li d'une bande périphérique opaque en face F2 et/ou F3 et/ou F4 est de préférence d'au moins 10mm et même 15mm. Aussi, la longueur de l'élément de connexion électrique peut être supérieure à Li.

L'élément de connexion électrique peut être agencé dans ou au voisinage de la région d'une couche opaque, notamment un émail (noir), le long d'un bord périphérique du vitrage feuilleté, généralement en face F2 et/ou face F4 ou encore en face F2 et/ou en face F3.

Aussi, dans un premier mode de réalisation, l'élément de connexion électrique peut même être disposé dans une région du toit dans laquelle le verre extérieur est entièrement (ou partiellement) opaque par la couche opaque (la plus externe), comme un émail (noir), en F2. Cette couche opaque peut être dans cette région du toit une couche pleine (fond continu) ou une couche avec une ou des discontinuités (surfaces sans couche opaque) par exemple couche sous forme d'un ensemble de motifs géométriques (en rond, rectangle, carré etc),ou non, de taille identiques ou distinctes (de taille de plus ou plus petite en s'éloignant de la tranche et/ou motifs de plus ou plus espacés en s'éloignant de la tranche).

Dans ce premier mode de réalisation, l'élément électroluminescent comme l'OLED ou QLED et l'élément de connexion électrique peut être visible uniquement à l'intérieur et donc masqué par la couche opaque en face F2.

L'élément de connexion électrique peut être disposé dans une région du toit dans laquelle le verre intérieur est opaque par une couche opaque (la plus interne) comme un émail (noir) de préférence en F4 voire en F3. L'élément électroluminescent comme l'OLED ou QLED peut être disposé cette région du toit, cette couche opaque comporte alors une épargne (par un masque au dépôt ou par retrait notamment laser) au droit de l'élément électroluminescent.

L'élément électroluminescent est placé à façon à l'avant comme à l'arrière du véhicule par exemple le long d'un bord longitudinal ou latéral du toit. On préfère une liseuse en regard de chaque siège.

En cas de plusieurs éléments électroluminescents ils peuvent être connectés en série ou en parallèle et/ou indépendamment. Deux éléments électroluminescents peuvent être sur un élément commun qui sert pour la connexion électrique.

Deux éléments électroluminescents peuvent être séparés et reliés entre eux par un élément de connexion électrique de préférence le plus discret possible par exemple des fils ou un connecteur plat transparent.

Dans un mode de réalisation du véhicule, il comporte au moins une unité de commande pour piloter l'élément électroluminescent (comme OLED ou QLED) et même au moins un capteur notamment pour détecter la luminosité. Une unité de commande pour piloter le (chaque) élément électroluminescent (OLED ou QLED) peut être dans le vitrage feuilleté (sur le premier vitrage ou le deuxième vitrage) ou sur le premier vitrage.

De préférence le toit vitré selon l'invention répond aux spécifications actuelles automobiles en particulier pour la transmission lumineuse T_{L} et/ou la transmission énergétique T_{E} et/ou la réflexion énergétique R_{E} et/ou encore pour la transmission totale de l'énergie solaire TTS.
Pour un toit automobile, on préfère l'un ou les critères suivants :
- T_{E} d'au plus 10% et même de 4 à 6%,
- R_{E} (de préférence côté face F1) d'au plus 10%, mieux de 4 à 5%
- et TTS <30% et même <26%, même de 20 à 23%.
La T_{L} peut être faible par exemple d'au plus 10% et même de 1 à 6%.

Afin de limiter l'échauffement dans l'habitacle ou de limiter l'usage d'air conditionné, le premier vitrage ou l'un des vitrages au moins (de préférence le verre extérieur) est teinté. Et le vitrage, en particulier feuilleté, peut comporter également une couche réfléchissant ou absorbant le rayonnement solaire, de préférence en face F4 ou en face F2 ou F3, en particulier une couche d'oxyde transparent électro-conducteur dite couche TCO ou même un empilement de couches minces comprenant au moins une couche TCO, ou d'empilements de couches minces comprenant au moins une couche d'argent (en F2 ou F3 de préférence pour un vitrage feuilleté), la ou chaque couche d'argent étant disposée entre des couches diélectriques.
On peut cumuler couche (à l'argent) en face F2 et/ou F3 et couche TCO en face F4. La couche TCO (d'un oxyde transparent électro-conducteur) est de préférence une couche d'oxyde d'étain dopé au fluor (SnO₂:F) ou une couche d'oxyde mixte d'étain et d'indium (ITO).

D'autres couches sont possibles, parmi lesquelles les couches minces à base d'oxydes mixtes d'indium et de zinc (appelées « IZO »), à base d'oxyde de zinc dopé au gallium ou à l'aluminium, à base d'oxyde de titane dopé au niobium, à base de stannate de cadmium ou de zinc, à base d'oxyde d'étain dopé à l'antimoine. Dans le cas de l'oxyde de zinc dopé à l'aluminium, le taux de dopage (c'est-à-dire le poids d'oxyde d'aluminium rapporté au poids total) est de préférence inférieur à 3%. Dans le cas du gallium, le taux de dopage peut être plus élevé, typiquement compris dans un domaine allant de 5 à 6%.
Dans le cas de l'ITO, le pourcentage atomique de Sn est de préférence compris dans un domaine allant de 5 à 70%, notamment de 10 à 60%. Pour les couches à base d'oxyde d'étain dopé au fluor, le pourcentage atomique de fluor est de préférence d'au plus 5%, généralement de 1 à 2%.

L'ITO est particulièrement préféré, notamment par rapport au SnO₂:F. De conductivité électrique plus élevée, son épaisseur peut être plus faible pour obtenir un même niveau d'émissivité. Aisément déposées par un procédé de pulvérisation cathodique, notamment assisté par champ magnétique, appelé « procédé magnétron », ces couches se distinguent par une plus faible rugosité, et donc un plus faible encrassement.

Un des avantages de l'oxyde d'étain dopé au fluor est en revanche sa facilité de dépôt par dépôt chimique en phase vapeur (CVD), qui contrairement au procédé de pulvérisation cathodique, ne nécessite pas de traitement thermique ultérieur, et peut être mis en oeuvre sur la ligne de production de verre plat par flottage.

Par « émissivité », on entend l'émissivité normale à 283 K au sens de la norme EN12898. L'épaisseur de la couche basse émissivité (TCO etc) est ajustée, en fonction de la nature de la couche, de manière à obtenir l'émissivité voulue, laquelle dépend des performances thermiques recherchées. L'émissivité de la couche basse émissivité est par exemple inférieure ou égale à 0,3, notamment à 0,25 ou même à 0,2. Pour des couches en ITO, l'épaisseur sera généralement d'au moins 40 nm, voire d'au moins 50 nm et même d'au moins 70 nm, et souvent d'au plus 150 nm ou d'au plus 200 nm. Pour des couches en oxyde d'étain dopé au fluor, l'épaisseur sera généralement d'au moins 120 nm, voire d'au moins 200 nm, et souvent d'au plus 500 nm.

Par exemple la couche basse émissivité comprend la séquence suivante :sous-couche haut indice/sous-couche bas indice/ une couche TCO/ surcouche diélectrique optionnelle.

Comme exemple préféré de couche basse émissivité (protégée durant une trempe, on peut choisir sous-couche haut indice (<40 nm) / sous-couche bas indice (<30 nm) / une couche ITO/ surcouche haut indice (5 - 15 nm))/ surcouche bas indice (<90 nm) barrière/ dernière couche (< 10 nm).

On peut citer comme couche basse émissivité celles décrites dans le brevet US2015/0146286, sur la face F4, notamment dans les exemples 1 à 3.

Dans une réalisation préférée :
- le premier et/ou le deuxième vitrage est teinté et/ou l'intercalaire de feuilletage est teinté sur tout en partie de son épaisseur
- et/ou l'une des faces F2 ou F3 ou F4 -de préférence la face F4 - du toit vitré, est revêtue d'une couche basse émissivité, notamment comprenant une couche d'oxyde transparent électro-conducteur (dite TCO) notamment un empilement de couches minces avec couche TCO ou un empilement de couches minces avec couche(s) d'argent
- et/ou l'une des faces F2 ou F3 ou F4 -de préférence la face F3 - du toit vitré, est revêtue d'une couche de contrôle solaire, notamment comprenant une couche d'oxyde transparent électro-conducteur (dite TCO) notamment un empilement de couches minces avec couche TCO ou un empilement de couches minces avec couche(s) d'argent
- et/ou un film additionnel (polymérique, comme un polyéthylène téraphtalate PET etc) teinté est entre les faces F2 et F3 ou (collé) en F4 voire en face F1.

En particulier, la face F4 du vitré, est revêtue d'une couche fonctionnelle transparente notamment basse émissivité, de préférence comprenant une couche TCO, dont une zone (alimentée électriquement, donc électrode) formant bouton tactile (pour piloter la première surface lumineuse).

Un film transparent (PET etc) porteur d'une couche fonctionnelle côté face F2 (ou face F3 en variante), peut former un interrupteur tactile capacitif, Il peut s'agir du film de protection.

L'invention concerne bien entendu tout véhicule notamment automobile comportant au moins un toit tel que décrit précédemment.

L'invention vise aussi à simplifier et/ou augmenter les cadences.

A cet effet l'invention a pour objet un procédé de fabrication comportant avant mise en place sur le premier vitrage le prémontage sur l'élément électroluminescent de l'optique de collimation en film(s) voire de l'optique de redirection en film et même d'un film de protection sur le dernier film optique de collimation ou de redirection, notamment par fixation périphérique même par collage périphérique formant éventuellement un scellage.

A cet effet, l'invention propose aussi un procédé de fabrication d'un toit feuilleté lumineux tel que décrit précédemment qui comporte les étapes suivantes:
- positionnement de l'élément électroluminescent, en particulier OLED (voire fixation notamment par collage de préférence transparent ou mise en contact adhésif par chauffage ponctuel etc) sur un feuillet intercalaire de feuilletage plein ou dans une ouverture borgne ou traversante et simultanément ou séparément positionnement de l'optique de collimation en regard de l'élément électroluminescent et même de l'éventuelle optique de redirection sur l'optique de collimation et successivement :
- mise en place de l'ensemble positionné entre le premier et deuxième vitrage
- feuilletage avec mise sous vide et chauffage voire mise sous pression (et chauffage), par exemple autoclavage.

On réalise ainsi des opérations hors ligne de feuilletage industrielle.

Le positionnement ou même assemblage (maintien par collage, contacts adhésifs ponctuels etc) de l'optique de collimation et de l'élément électroluminescent en particulier OLED peut être sur un feuillet intercalaire de feuilletage distinct.

Le positionnement ou même assemblage (maintien par collage, contacts adhésifs ponctuels etc) de l'ensemble élément électroluminescent en particulier OLED /optique de collimation l'optique de collimation étant alors fixée et de préférence collée sur la surface de sortie en périphérie, peut être sur un feuillet intercalaire de feuilletage commun.

De préférence le trou borgne ou traversant est d'épaisseur Eₜ de 0,3 à 0,9mm avec en valeur absolue E1-Et d'au plus 0,3mm ou Ei- somme des épaisseurs OLED et optique(s) d'au plus 0,3mm.

On peut utiliser de préférence :
- un premier et seul feuillet avec un trou borgne, de préférence PVB éventuellement acoustique
- un premier feuillet (PVB) avec un trou borgne et traversant et un deuxième feuillet plein (PVB), avec trou d'épaisseur Eₜ de 0,3 à 0,9mm éventuellement acoustique et/ou teinté avec en valeur absolue E1-Et d'au plus 0,3mm (Ei- somme des épaisseurs OLED et optique(s) d'au plus 0,3mm)
- un premier feuillet (PVB) avec un trou borgne et traversant entre un deuxième feuillet plein (PVB) et un troisième feuillet plein (PVB).
En particulier :
- le feuillet arrière côté F2 est du PVB d'épaisseur Eᵢ de 0,3 à 0,9mm éventuellement acoustique et/ou teinté
- et/ou le feuillet central éventuellement acoustique et/ou teinté avec trou borgne ou traversant (du PVB) d'épaisseur Eᵢ de 0,3 à 0,9mm avec en valeur absolue E1-Ei d'au plus 0,3mm (Ei- somme des épaisseurs OLED et optique(s) d'au plus 0,3mm) et même en valeur absolue E1-Et d'au plus 0,3mm (Ei- somme des épaisseurs OLED et optique(s) d'au plus 0,3mm)
- et/ou le feuillet avant coté F3 est du PVB d'épaisseur Eₖ de 0,3 à 0,9mm clair ou extraclair, éventuellement acoustique.

Le procédé peut comprendre ou prévoir en outre :
- que le positionnement de l'élément électroluminescent est sur ledit feuillet intercalaire de feuilletage dans une ouverture borgne ou traversante côté surface d'entrée, avec l'optique de collimation et l'éventuelle optique de redirection logée dans l'ouverture et fixée, et de préférence collée, en périphérie de la surface de sortie ou avec l'optique de collimation ou l'éventuelle optique de redirection capotant l'ouverture et sur ledit feuillet intercalaire de feuilletage,
- que le positionnement de l'élément électroluminescent en particulier OLED est sur ledit feuillet intercalaire de feuilletage plein avec une aide au positionnement notamment un élément du côté de (la face opposée de l'intercalaire de feuilletage (feuillet) et comportant un repère comme un élément antiadhérent contre cette face ou même un élément comme un calque sur la face opposée de la table d'assemblage transparente (verre etc)
- que ledit feuillet intercalaire (plein ou troué) est un feuillet PVB éventuellement acoustique ou est composite (préassemblé ou non) PVB/film plastique fonctionnel ou PVB/film plastique fonctionnel/PVB, le positionnement étant sur du PVB ou sur le film fonctionnel, de préférence le film fonctionnel est plein lorsque le PVB est troué
- avant ledit positionnement, la fixation notamment par collage d'un film de protection local sur la face avant de l'optique de collimation ou de l'éventuelle optique de redirection et lors dudit positionnement ledit intercalaire de feuilletage a un trou borgne logeant le film de protection local ou ledit intercalaire de feuilletage a un trou traversant et un autre intercalaire de feuilletage ferme le trou
- ledit intercalaire de feuilletage ayant un trou traversant logeant l'élément électroluminescent en particulier OLED et l'optique de collimation et l'éventuelle optique de redirection, le procédé comprend le placement d'un film de protection fermant ledit trou et d'un autre feuillet intercalaire couvrant le film de protection éventuellement déjà en contact adhésif avec le film de protection
- la mise en contact adhésif ponctuel par chauffage (et pression) hors zone élément électroluminescent en particulier OLED:
   - dudit feuillet intercalaire et d'un autre feuillet intercalaire dit arrière côté surface d'entrée
   - et/ou dudit feuillet intercalaire et un autre feuillet intercalaire dit avant côté surface de sortie,
   - et/ou de l'optique de collimation ou de l'éventuelle optique de redirection avec le feuillet intercalaire ou un autre feuillet intercalaire
- l'élément électroluminescent en particulier OLED et même l'optique de collimation et même l'éventuelle optique de redirection étant dans un trou borgne ou traversant d'un desdits feuillets intercalaire et/ou l'élément électroluminescent et même l'optique de collimation et même l'éventuelle optique de redirection étant en sandwich entre ledit feuillet intercalaire et l'autre feuillet intercalaire arrière ou avant
- la mise en contact adhésif ponctuel par chauffage (et pression) de l'élément électroluminescent en particulier OLED et dudit feuillet intercalaire et/ou dudit l'élément électroluminescent et d'un autre feuillet intercalaire.

Pour maintenir l'élément électroluminescent et/ou l'optique de collimation (non solidaire de l'élément électroluminescent en particulier OLED) on peut utiliser pour ce faire un adhésif (colle notamment UV, bande adhésif double face) transparent mais de préférence on n'ajoute pas de matière.

La mise en contact adhésif local permet que les éléments restent bien solidaires les uns des autres lors de la suite du procédé.

On prévoit éventuellement aussi mise en contact adhésif local de l'ensemble avec au moins l'un des premier et deuxième vitrages

Chaque contact adhésif est par exemple de largeur d'au plus 15mm

En particulier de manière avantageuse, la mise en contact adhésif local est par chauffage local de l'intercalaire de feuilletage (de 60° à 80°C pour le PVB) et mieux par pression.

Le chauffage local est notamment par induction, air chaud, élément chauffant, par rayonnement (laser etc).

Comme outil de chauffage (et mieux de pression) on peut utiliser une lampe « fer à souder » avec un embout plat (avec un film antidhérent (silicone, PTFE élastomère etc) apte à laisser passer la chaleur, des doigts chauffants, un pistolet à air chaud.

On peut choisir un outil de chauffage qui permet d'effectuer les différents points adhésifs ponctuels en une seule opération.

Le film de protection local peut être :
- collé en périphérie de l'optique de collimation
- précollé sur la face arrière du PVB avant par mise en contact adhésif ponctuel par chauffage de préférence
- collé sur la face d'un PVB central avec une ouverture pour l'élément électroluminescent en particulier OLED et l'optique de collimation par mise en contact adhésif ponctuel par chauffage de préférence.

Le film de protection couvrant peut être :
- précollé sur la face arrière du PVB avant par mise en contact adhésif ponctuel par chauffage de préférence
- collé sur la face d'un PVB central avec une ouverture pour l'élément électroluminescent en particulier OLED et l'optique de collimation par mise en contact adhésif ponctuel par chauffage de préférence.

Le procédé peut comprendre la fourniture d'un feuillet dit central de PVB ou d'un feuillet composite PVB/ film plastique fonctionnel tel que PET portant un éventuel revêtement fonctionnel ou PVB/ film plastique fonctionnel tel que PET portant un éventuel revêtement fonctionnel /PVB, avec une ouverture traversante logeant avant le feuilletage l'élément électroluminescent en particulier OLED et éventuellement l'optique de collimation collé sur la surface de sortie en périphérie-
Le procédé peut comprendre la mise en contact adhésif local entre le feuillet central et le feuillet arrière ou avant et/ou l'élément électroluminescent en particulier OLED.

De manière classique le feuilletage comporte dégazage, et parfois autoclavage qui implique la mise en oeuvre de températures et pressions appropriées de manière habituelle, lors de l'autoclave, le feuillet tel que le PVB est amené à relativement haute température (supérieure à 100°C pour le PVB), ce qui va le ramollir et lui permettra de fluer. En cas d'utilisation de plusieurs feuillets notamment PVB, un phénomène remarquable se produit alors, les interfaces les différents PVB vont disparaitre, le PVB va en quelque sorte se cicatriser pour ne former en fin d'autoclave qu'un film homogène et continu.

On réalise le feuilletage qui peut influer sur la largeur de l'ouverture éventuelle, par fluage de l'intercalaire. Par fluage, l'intercalaire de feuilletage (premier feuillet, feuille ou feuillet composite) avec l'ouverture plus large que l'élément électroluminescent et même que l'optique de collimation.
Chaque feuillet est de préférence dimensionné pour couvrir au moins 80% ou 90% de la face F2, et il pourrait dépasser de la face F2.
Chaque feuillet est de préférence PVB.

La présente invention est à présent expliquée plus en détail en référence aux figures annexées dans lesquelles :

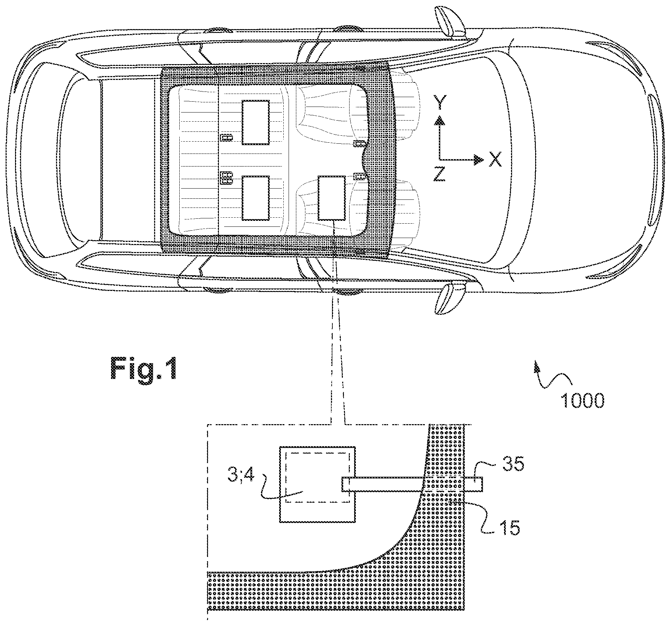

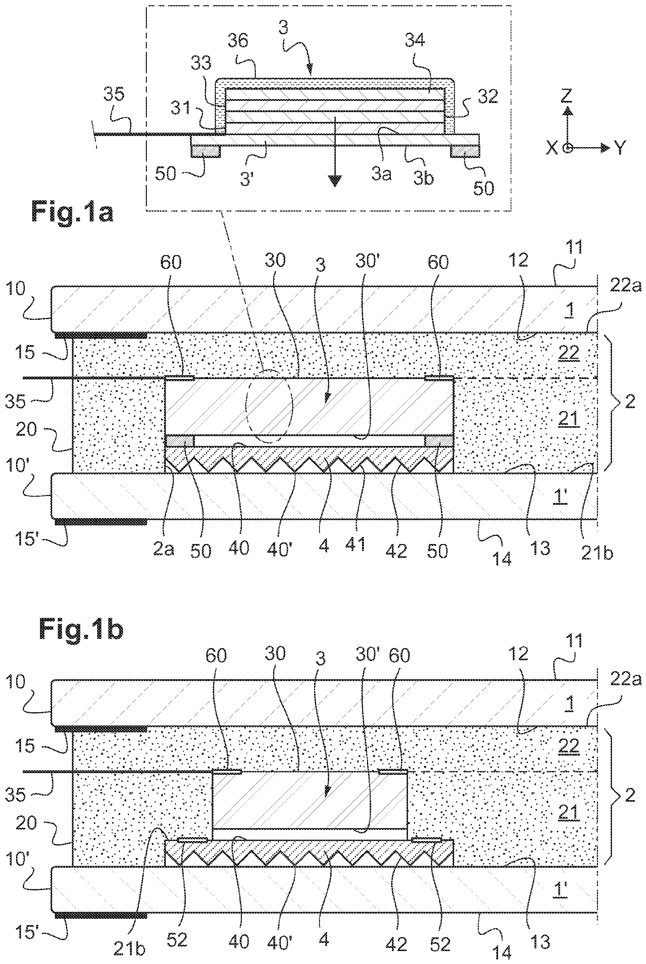

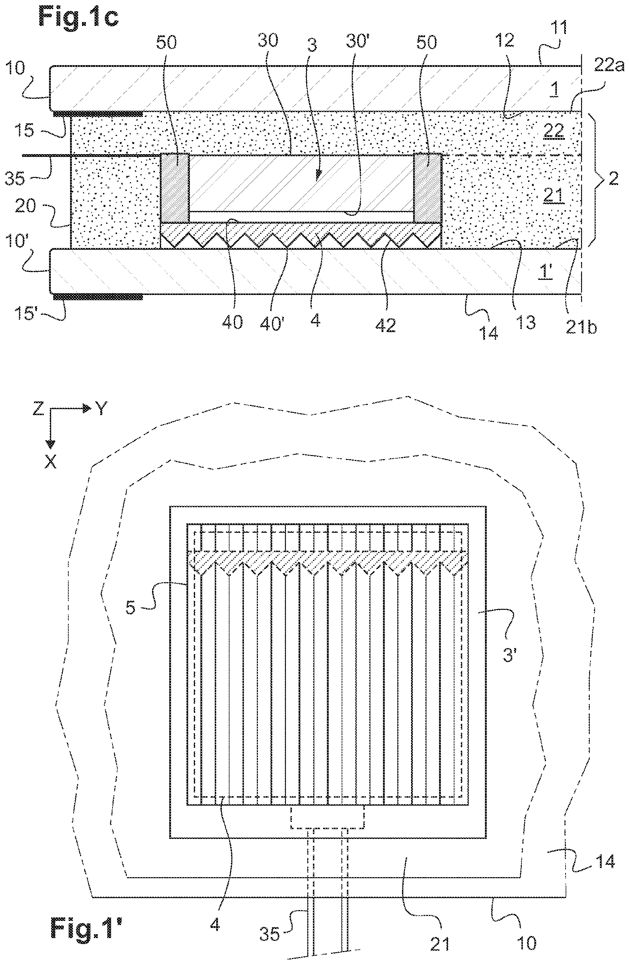

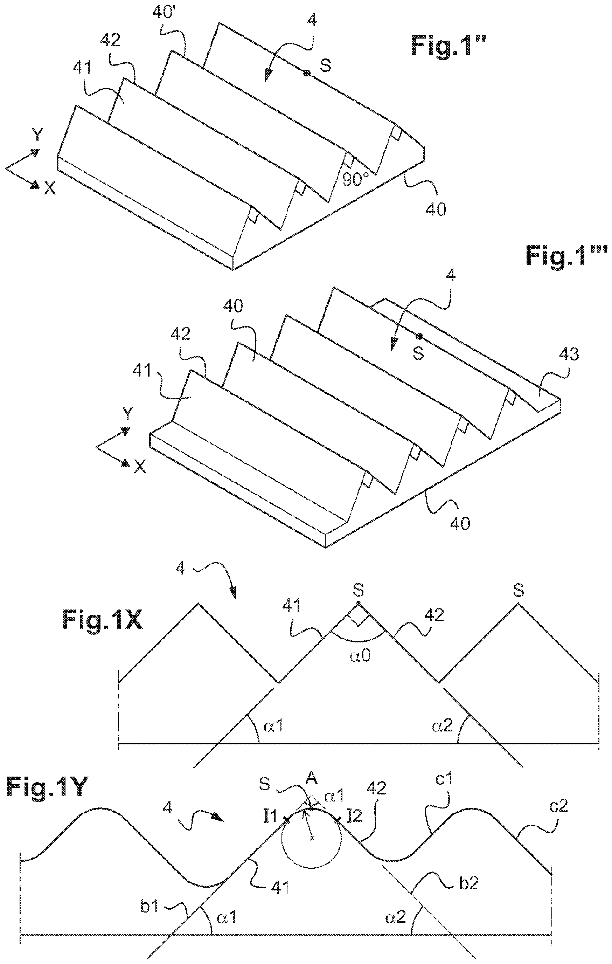

La figure 1a est une vue de coupe du toit selon l'invention et avec une vue de détail de coupe de la structure de l'OLED.
La figure 1b est une vue de coupe du toit selon l'invention.
La figure 1c est une vue de coupe d'une alternative du toit selon l'invention.

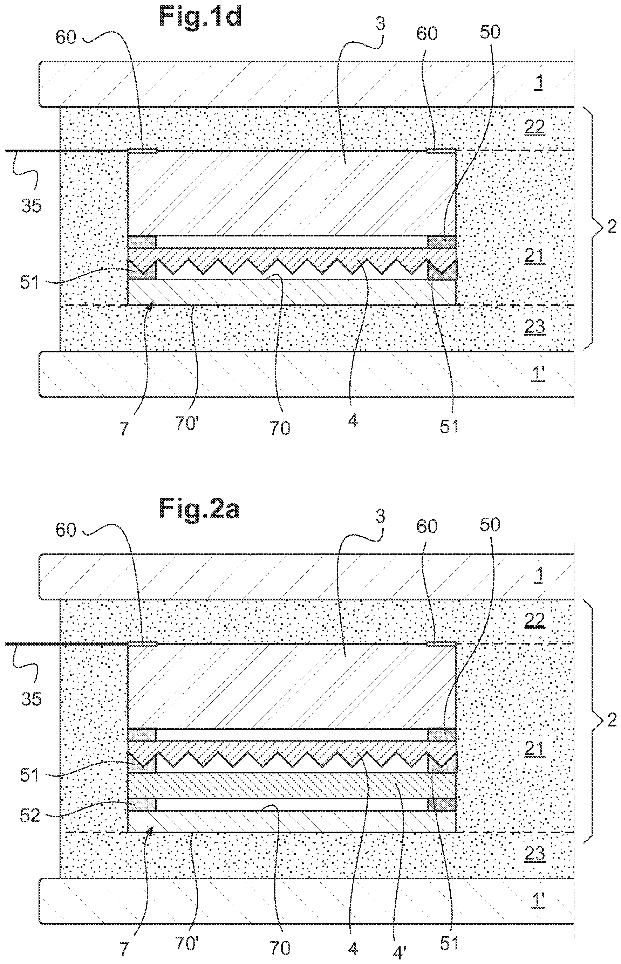

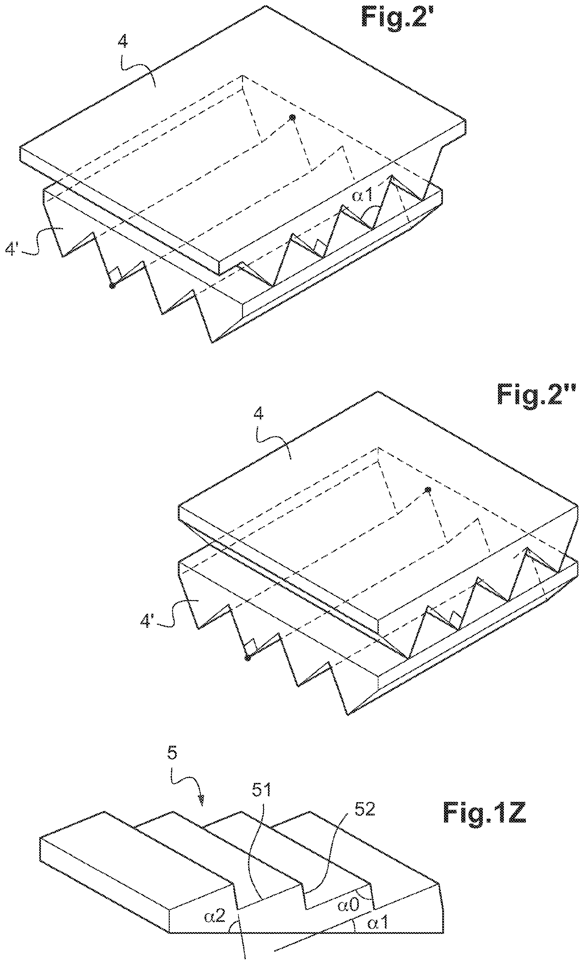

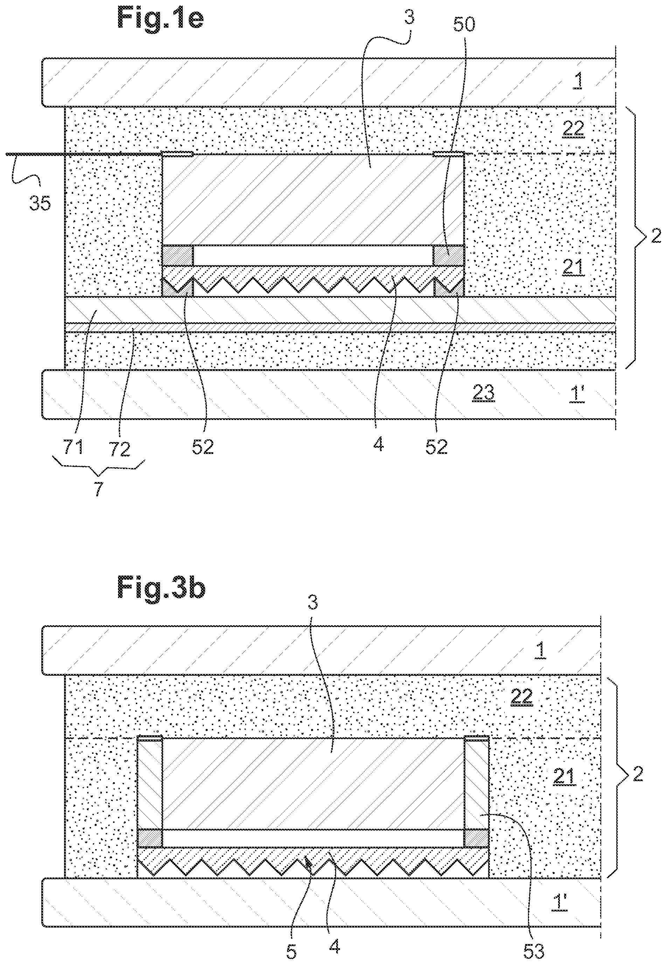

La figure 1' est une vue de détail de face côté intérieur de l'OLED avec l'optique de collimation.
La figure 1" est une vue d'ensemble d'une optique de collimation.
La figure 1'" est une vue d'ensemble d'une optique de collimation.
La figure 1X est une vue de coupe d'une optique de collimation.
La figure 1Y est une vue de coupe d'une optique de collimation.
La figure 1Z est une vue d'ensemble d'une optique de redirection.
La figure 1d est une vue de coupe d'une autre alternative du toit selon l'invention.
La figure 1e est une vue de coupe d'une autre alternative du toit selon l'invention.
La figure 2a est une vue de coupe d'un seconde mode de réalisation du toit selon l'invention.
La figure 2' est une vue d'ensemble d'une optique de collimation.
La figure 2" est une vue d'ensemble d'une optique de collimation.

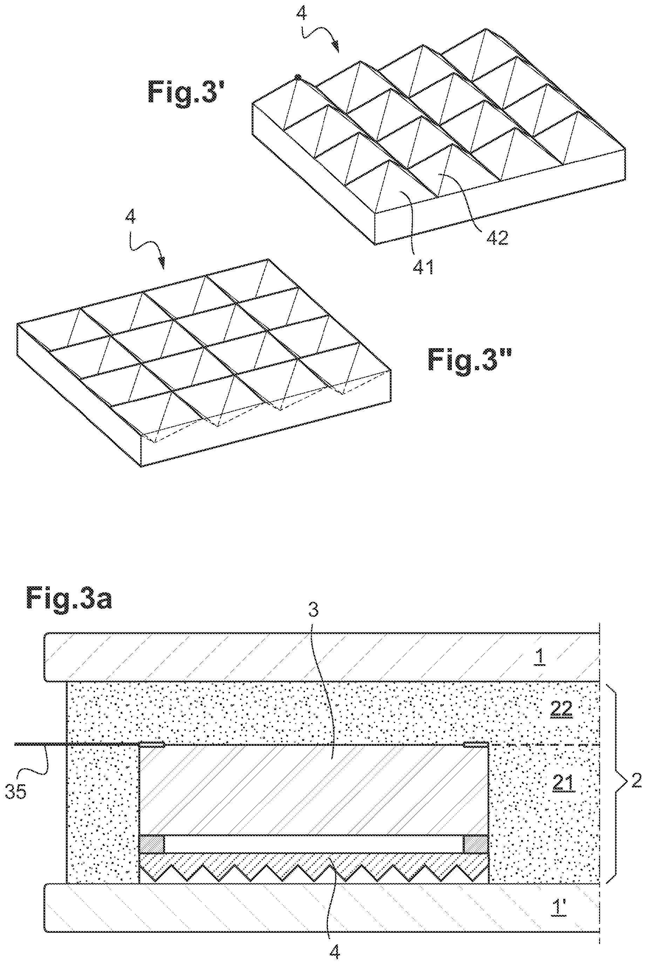

La figure 3a est une vue de coupe d'un troisième mode de réalisation du toit selon l'invention.
La figure 3b est une vue de coupe d'une alternative au seconde mode de réalisation du toit selon l'invention.
La figure 3' est une vue d'ensemble d'une optique de collimation.
La figure 3" est une vue d'ensemble d'une optique de collimation.

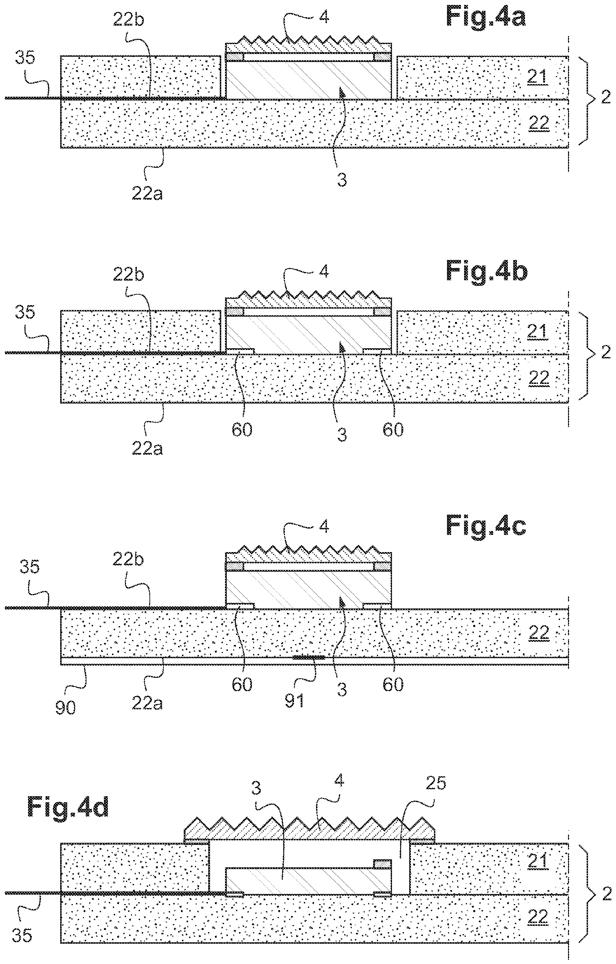

La figure 4a est une vue montrant une étape de montage hors feuilletage de l'OLED avec l'optique de collimation et de redirection sur un premier feuillet PVB intercalaire de feuilletage dans le but de réaliser le toit vitré feuilleté avec liseuse intégrée selon l'invention.
La figure 4b est une vue montrant une étape de montage hors feuilletage de l'OLED avec l'optique de collimation et de redirection sur un premier feuillet PVB intercalaire de feuilletage dans le but de réaliser le toit vitré feuilleté avec liseuse intégrée selon l'invention.
La figure 4c est une vue montrant une étape de montage hors feuilletage de l'OLED avec l'optique de collimation sur un premier feuillet PVB intercalaire de feuilletage dans le but de réaliser le toit vitré feuilleté avec liseuse intégrée selon l'invention.
La figure 4d est une vue montrant une étape de montage hors feuilletage de l'OLED avec l'optique de collimation sur un premier feuillet PVB intercalaire de feuilletage dans le but de réaliser le toit vitré feuilleté avec liseuse intégrée selon l'invention.

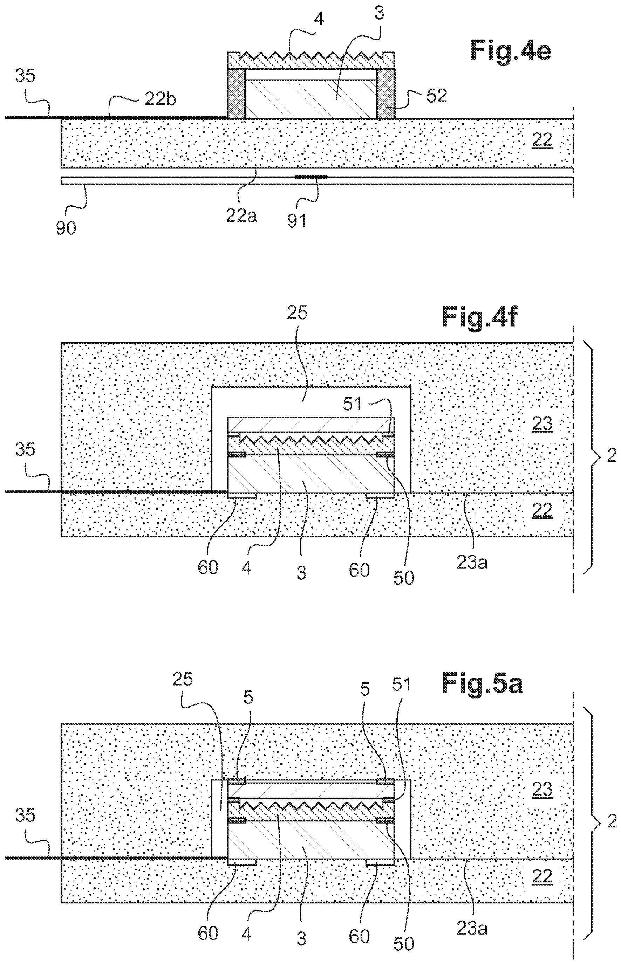

La figure 4e est une vue montrant une étape de montage hors feuilletage de l'OLED avec l'optique de collimation sur un premier feuillet PVB intercalaire de feuilletage dans le but de réaliser le toit vitré feuilleté avec liseuse intégrée selon l'invention.
La figure 4f est une vue montrant une étape de montage hors feuilletage de l'OLED avec l'optique de collimation sur un premier feuillet PVB intercalaire de feuilletage dans le but de réaliser le toit vitré feuilleté avec liseuse intégrée selon l'invention.
La figure 5a est une vue montrant une étape de montage hors feuilletage de l'OLED avec l'optique de collimation sur un premier feuillet PVB intercalaire de feuilletage dans le but de réaliser le toit vitré feuilleté avec liseuse intégrée selon l'invention.

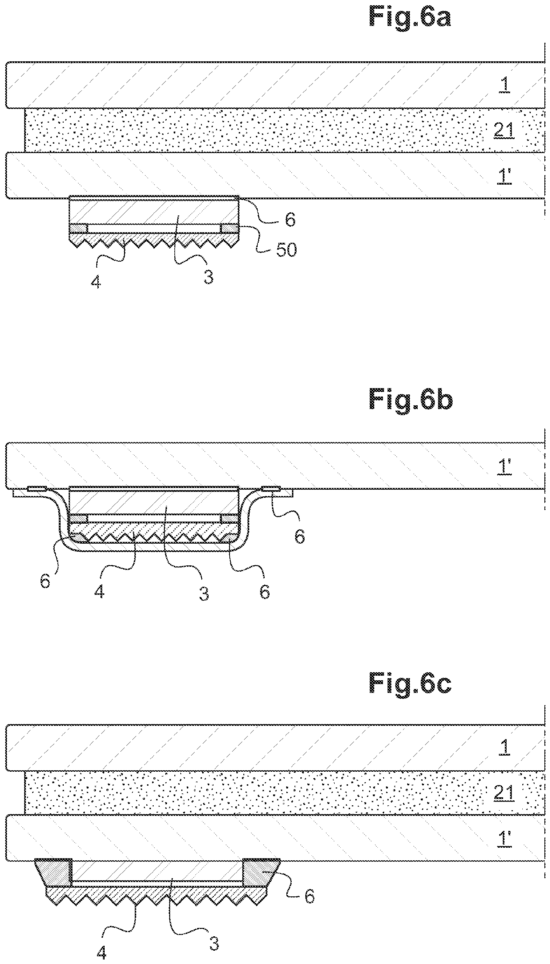

La figure 6a est une vue en coupe de l'OLED monté sur un vitrage feuilleté selon l'invention.
La figure 6b est une vue en coupe de l'OLED monté sur un vitrage simple selon l'invention.
La figure 6c est une vue en coupe d'une variante de l'OLED monté sur un vitrage feuilleté selon l'invention.

L'ensemble des figures décrivent comme source de lumière un OLED mais on peut choisir en variante QLED ou TFEL. Les figures ne sont pas à l'échelle.

La figure 1 est une vue extérieure de face d'un toit vitré 10000 monolithique (plastique comme PMMA, PC, etc ou verre) ou feuilleté (verre/PVB/ verre ou plastique) comportant des trois liseuses selon l'invention ici de forme rectangulaire de 15cm par 10cm.
Chaque liseuse comporte une source de lumière surfacique comme une OLED 3 à lumière blanche qui est collimatée par une optique de collimation 4 détaillé plus tard. On prévoit un connecteur électrique 35 qui dépasse de la tranche du toit et en partie masquée par l'émail 15 en face F4.

La figure 1a est une vue de coupe du toit à liseuse selon l'invention et avec une vue de détail de coupe de la structure de l'OLED.
Le toit vitré à liseuse de véhicule notamment automobile 100a comprenant :
- un premier vitrage transparent 1, en verre minéral voire organique notamment teinté, par exemple en verre (teinté) VG10 et de 2,1mm d'épaisseur, formant vitrage extérieur, avec des faces principales 11, 12 dite faces F1 et F2, une tranche 10 , et une direction dite de référence qui est l'horizontale entre l'avant et l'arrière du toit
- un deuxième vitrage 1', formant vitrage intérieur par exemple en verre TSA (ou clair ou extraclair) et de 2,1mm d'épaisseur ou même de 1,6mm ou encore de moins de 1,1mm (verre trempé chimiquement notamment), avec des troisième et quatrième faces principales 13, 14 respectivement dites face F3 et face F4,
- entre la face F2 et la face F3 formant les faces internes 12, 13 du vitrage feuilleté un intercalaire de feuilletage 2,21,22 en matière polymérique, ici en PVB, d'épaisseur submillimétrique de préférence d'environ 1mm ou moins, par exemple de 0,76mm environ pour un PVB classique (RC41 de Solutia ou d'Eastman) en variante si nécessaire un PVB acoustique (tricouche ou quadricouche) par exemple d'épaisseur 0,81mm environ, comportant une couche de PVB 21 avec une face FB en contact adhésif avec la face F3 (nue ou revêtue) et une ouverture débouchante 2a sur la face F3, notamment tranche 20 du PVB en retrait par exemple de 2mm de la tranche des vitrages.
- une éventuelle couche fonctionnelle par exemple de basse émissivité en face F4 (ITO etc) et/ou alternativement la face F3 est éventuellement revêtue d'une couche fonctionnelle (chauffante, basse émissivité etc) qui peut avoir une zone formant interrupteur tactile pour allumer la liseuse
- des couches périphériques de masquages interne et externe 15',15 en face F2 et F4, par exemple en émail noir.

Dans l'ouverture débouchante est logé un élément électroluminescent 3 est un OLED 3, (ou QLED ou un TFEL) et apte à émettre de la lumière polychromatique (blanche) vers la face F3, OLED ayant une surface de sortie 30 vers la face F3 et une surface d'entrée 30 opposée dans le fond de l'ouverture 2a. L'OLED comporte un connecteur 35 dépassant de la tranche du premier vitrage ici fixé côté surface d'entrée en périphérie.
L'OLED est à émission par l'arrière comportant un support 3', qui porte côté face F2 dans cet ordre en s'éloignant du support : une sous couche fonctionnelle éventuelle 31, une anode transparente 32, un système électroluminescent organique 33, une cathode réfléchissante 34 et une couche (résine etc) d'encapsulation 36.
L'OLED 3 a une surface émettrice de longueur d'au moins 5cm et de largeur d'au moins 2cm, et est de préférence d'épaisseur E0 submillimétrique, avec un demi angle d'émission au sommet de 50° à 70° et une direction d'émission principale normale au plan de l'OLED.

En regard de l'OLED 3 est placée une optique de collimation 4, ayant une face arrière 40 côté surface de sortie et une face avant 40' opposée à la face arrière. L'ouverture débouchante 2a entoure l'OLED 3 et l'optique 4 et même en contact de sa tranche ou en variante espacé d'au plus 0,5mm et même d'au plus 0,1mm de la tranche.

Lors de la fabrication on choisit par exemple un premier feuillet 21, en PVB, avec une ouverture traversante (ou borgne en variante) et un deuxième feuillet arrière de PVB 22 côté face arrière 30. Par fluage les deux feuillets sont accolés avec ou non une interface discernable (ici en pointillés). Si nécessaire, l'OLED 3 est préfixée sur le feuillet arrière 22 par collage 60 ou par mise en contact adhésif ponctuel par chauffage ponctuel (et pression). Les deux feuillets 21, 22 peuvent être mise en contact adhésif ponctuel hors zone de l'OLED 3 avant ou après la mise en place entre les deux vitrages 1, 1'.

L'optique de collimation 4, est ici un film optique prismatique fixé en périphérie par un adhésif double face ou une colle 50 à la surface de sortie (générant une lame d'air en entrée). Il s'agit par exemple d'un film 4 exemple de moins de 0,3mm et en PET partiellement texturé en épaisseur. La figure 1X est une vue de coupe de l'optique de collimation 4 avec des sommets S en pointes et les angles représentatifs des prismes angle au sommet, angle avec plan du film prismatique).
Le film optique prismatique 4 comportant en face avant 40' un réseau de prismes de préférence jointifs et même symétriques avec des sommets S et avec un pas T entre sommets qui est de 10µm à 500µm s'étendant longitudinalement suivant un axe formant un angle d'au plus 10° avec la direction de référence et même parallèle. Chaque prisme étant défini par deux faces longitudinales 41, 42 chaque prisme présente un angle au sommet allant de 60 à 110°, mieux ici de 90° et chaque face longitudinale forme avec le plan du film optique 4 un angle allant de 30 à 55° mieux ici de 45°.

Par exemple le pas est de 160 µm et la hauteur de 80µm et l'épaisseur restante est de 175µm (avec angle au sommet et coté vallée de 90° +-20 arc).

De l'air est entre la surface de sortie et la face d'entrée de ce premier film optique unique de l'optique de collimation.

De l'air est entre les prismes de la face avant de l'optique de collimation, les sommets des motifs de chaque face avant sont en contact physique avec la face F3.

La figure 1Y est une vue d'ensemble d'une optique de collimation. Cette figure se différencie de la précédente en ce que les sommets sont arrondis et les faces latérales courbes, on définit les angles représentatifs des prismes (angle au sommet, angle avec plan du film) à partir des deux droites sécantes b1, b2 en A passant par les points d'inflexion I1, I2. On limite aussi le rayon de courbure.

La figure 1' est une vue de détail de face côté intérieur de l'OLED 3 avec l'optique de collimation 4 collée en périphérie 5 par exemple en regard des bords techniques (sur le support 3') de l'OLED 3. L'axe longitudinal des prismes est l'horizontal X entre l'avant et l'arrière du toit (de la voiture).
Le collage peut être en cadre et former un scellement.

La figure 1" est une vue d'ensemble de l'optique de collimation 4 prismatique. La figure 1'" est une vue d'ensemble de l'optique de collimation 4 prismatique qui se différencie de la précédente par des extrémités plates 43 pour la fixation.

La figure 1b est une vue de coupe d'un toit à liseuse 100b selon l'invention.
Cette figure se différencie de la figure 1a en ce que l'optique de collimation 4 est plus large que l'OLED 3 et que l'ouverture débouchante (l'ouverture traversante du deuxième feuillet ou feuillet avant 21) et l'optique de collimation 4 est ici fixée sur (ou contre) la face FB 21 du PVB 2 (feuillet avant 21) par collage 52 (double face colle etc) ou avant feuilletage par mise en contact adhésif ponctuel par chauffage ponctuel (et pression).

La figure 1c est une vue de coupe d'une alternative du toit à liseuse selon l'invention. Cette figure se différencie de la figure 1a en ce que l'optique de collimation 4, toujours dans l'ouverture débouchante, est plus large que l'OLED 3 et est collée au PVB 2 (face avant du feuillet PVB arrière 22) avec ou sans aide d'espaceur pour tout moyen de collage 50 (double face, colle etc).

La liseuse peut être placée au- dessus de l'emplacement de l'habitacle à éclairer ou il peut être nécessaire ou souhaiter placer la liseuse adjacente, décalée de l'emplacement.
Aussi, le toit comprend en outre en regard de l'optique de collimation, de préférence sur la face avant de l'optique de collimation (fixée en périphérie, par exemple collée ou soudée ou espacée d'au plus 1mm) une optique de redirection, l'optique de collimation est entre l'OLED et l'optique de redirection, et est un film optique de redirection comportant un réseau de prismes assymétriques avec des sommets et avec un pas T' entre sommets qui est de 10µm à 500µm, de préférence avec au moins 4 ou même 10 motifs en regard de la surface de sortie (ou émettrice de lumière),
La figure 1Z est une vue d'ensemble d'une telle optique de collimation assymétrique. L'optique de redirection comporte ainsi un premier film optique 5 qui est prismatique assymétrique avec sur une face principale opposée à la surface de sortie dite face avant finale, ledit réseau de prismes assymétriques s'étendant longitudinalement suivant un troisième axe formant un angle d'au plus 10°, au plus 5° ou au plus 2° avec ledit premier axe et même parallèle et/ou avec la direction de référence du vitrage (l'horizontale entre l'avant et l'arrière) et même est parallèle, notamment avec une épaisseur submillimétrique.
Chaque prisme assymétrique est défini par des première et deuxième faces longitudinales, le prisme ayant de préférence une longueur L et une largeur W avec L>2W et mieux >5W ou >10W.
Chaque prisme assymétrique présente un angle au sommet a'0 allant de 50 à 60° mieux 55°±5°, 55°±2° et la première face longitudinale 51 (dit grand côté) forme avec le plan du film un premier angle, allant de 31 à 41° mieux de 35°±5°, 35°±2° (naturellement la deuxième face longitudinale (dit petit côté) 52 forme avec le plan du film un deuxième angle, allant de 79 à 99° mieux de 85 à 90°, 88 à 90° de préférence d'au plus 90°. De préférence la différence entre a4-a3 est supérieure à 40° et même à 50°.
En variante on choisit même un ensemble de deux films optiques parallèles qui sont prismatiques assymétriques.

La figure 1d est une vue de coupe d'une autre alternative du toit à liseuse selon l'invention.
Cette figure se différencie de la figure 1a en ce que l'ouverture dans le PVB est interne. Par exemple lors de la fabrication on a placé un feuillet PVB avant 23.
Pour éviter le fluage lors du feuilletage qui supprimerait la fonction optique un film de protection plastique 7 local par exemple de moins de 0,3mm et en PET est collé en périphérie de la face avant du film optique prismatique.
Ce film 7 peut être également un bouton tactile capacitif pour on/off de la liseuse 3,4. Il comporte alors une couche électroconductrice pour ce faire.

La figure 1e est une vue de coupe d'une autre alternative du toit à liseuse selon l'invention.
Cette figure se différencie de la précédente en ce que le film de protection plastique 7 est un film couvrant par exemple de moins de 0,3mm et en PET qui est collé en périphérie de la face avant du film optique prismatique 4 par tout moyen de collage 52 et/ou simplement recouvre (ferme) l'ouverture débouchante. Il est en contact adhésif avec le PVB avant par exemple préassemblé avec le PVB avant feuilletage notamment PET fonctionnel 7/PVB avant ensemble avant feuilletage).
Ce film 7,71 peut être teinté et/ou avoir un revêtement fonctionnel électroconducteur 72 côté face F2 ou F3 : contrôle solaire, low E, chauffante.. et/ou zone avec bouton tactile on/off.

La figure 2a est une vue de coupe d'un seconde mode de réalisation du toit à liseuse selon l'invention.
Cette figure se différencie de la figure 1d en ce qu'on rajoute un deuxième film prismatique 4' identique croisé à 90° et en périphérie collé (soudé etc) 51 au premier film et en périphérie collé (soudé etc) 52 au film de protection 7 local.

La figure 2' est une vue d'ensemble d'une optique de collimation avec les deux films prismatiques croisés avec des extrémités plates (pour le collage).

La figure 2" est une vue d'ensemble d'une optique de collimation.
Cette figure se différencie de la précédente en ce que les extrémités sont classiques (chaque grand film recoupé etc).

La figure 3a est une vue de coupe d'un troisième mode de réalisation du toit à liseuse selon l'invention.
Cette figure se différencie de la figure 1a en ce que l'optique de collimation 4 (toujours un film plastique texturé par exemple en PET et de moins de 0,6 mm) porte des motifs bidimensionnels.

Chaque motif bidimensionnel étant défini par un flanc 41,42 et, dans un plan P normal au film le motif bidimensionnel présente un angle au sommet allant de 60 à 110°, chaque intersection du flanc avec le plan P formant avec le plan du film un angle allant de 30 à 55°. De préférence on choisit angle au sommet (dans le plan P) de 90° et autres angles de 45°.

Si les motifs bidimensionnels sont en creux, le réseau de motifs bidimensionnels est un réseau de cavités, les sommets S sont orientés vers la face F2 et la surface haute de chaque cavité est libre ou en contact physique avec un élément transparent, de l'air est dans les cavités.

Si les motifs bidimensionnels sont en reliefs, les sommets des motifs de chaque face avant sont libres ou en contact physique avec un élément transparent, de l'air est entre les motifs bidimensionnels.

La figure 3' est une vue d'ensemble de cette optique de collimation 4 avec les motifs en reliefs.

La figure 3" est une vue d'ensemble de cette optique de collimation 4 avec les motifs en creux (cavités remplies d'air).
La figure 3b est une vue de coupe d'un troisième mode de réalisation du toit à liseuse selon l'invention.
Cette figure se différencie de la figure 3a en ce que l'optique de collimation 4 est collée sur un cadre espaceur 53 entourant l'OLED 3 par exemple contre ou collé au PVB arrière 22.

L'optique 4, est ici un film optique prismatique assymétrique contre ou comme ici fixé en périphérie par un adhésif double ou une colle 60 à la face F3.

La figure 4a est une vue montrant une étape de montage hors feuilletage de l'OLED avec l'optique de collimation 4 sur un premier feuillet arrière 22 PVB intercalaire de feuilletage dans le but de réaliser le toit vitré feuilleté avec liseuse intégrée selon l'invention.
L'optique de collimation 4 (un film prismatique ou deux films croisés ou à motifs 2D) est prémontée sur l'OLED 3 par collage périphérique.
On utilise un deuxième feuillet 21 avec une ouverture traversante logeant l'ensemble avec le connecteur 35 dépassant (coté surface d'entrée de l'OLED 3). On place le tout sur le feuillet arrière (face 22b) avec éventuel mise en contact adhésif local par chauffage et/ou pression (rouleau) entre PVB 21 et PVB 22 hors zone OLED ou entre OLED et 22 et /ou entre le connecteur et les PVBs 21, 22.
En variante on place d'abord le feuillet troué et on le soulève pour placer l'ensemble OLED et optique dans les zones repérées.
Si on rajoute un troisième feuillet PVB coté surface de sortie (PVB avant) il faut utiliser un film de protection local ou couvrant entre l'optique et la face arrière de ce feuillet PVB avant. Par exemple un film plastique mince transparent et même à couche fonctionnelle.

La figure 4b est une vue montrant une étape de montage hors feuilletage de l'OLED avec l'optique de collimation 4 sur un premier feuillet arrière 22 PVB intercalaire de feuilletage dans le but de réaliser le toit vitré feuilleté avec liseuse intégrée selon l'invention.
Cette figure se différencie de la précédente en ce que l'on fixe par collage la surface arrière de l'OLED sur le feuillet arrière 22.
Si on rajoute un troisième feuillet PVB coté surface de sortie (PVB avant) il faut utiliser un film de protection local ou couvrant entre l'optique et la face arrière de ce feuillet PVB avant. Par exemple un film plastique mince transparent et même à couche fonctionnelle.

La figure 4c est une vue montrant une étape de montage hors feuilletage de l'OLED avec l'optique de collimation et de redirection sur un premier feuillet PVB intercalaire de feuilletage dans le but de réaliser le toit vitré feuilleté avec liseuse intégrée selon l'invention.
Cette figure se différencie de la précédente en ce qu'on n'utilise pas (encore) de deuxième feuillet avec ouverture traversante ou borgne.
On prévoit un aide au positionnement de l'OLED par un film 90 avec un repère 91 soit antiadhérent contre la face 22a soit à l'opposé de la table transparente (verre) de feuilletage.
Si on rajoute un troisième feuillet PVB coté surface de sortie (PVB avant) il faut utiliser un film de protection local ou couvrant entre l'optique et la face arrière de ce feuillet PVB avant. Par exemple un film plastique mince transparent et même à couche fonctionnelle.

La figure 4d est une vue montrant une étape de montage hors feuilletage de l'OLED avec l'optique de collimation et de redirection sur un premier feuillet PVB intercalaire de feuilletage dans le but de réaliser le toit vitré feuilleté avec liseuse intégrée selon l'invention.
Cette figure se différencie de la figure 4a en ce que l'optique de collimation 4 plus large que le trou 25 est fixée contre la face avant du feuillet trouée 21 par collage ou en variante par mise en contact adhésif (chauffage et/ou pression). L'optique referme le trouet est espacé de l'OLED.
Si on rajoute un troisième feuillet PVB coté surface de sortie (PVB avant) il faut utiliser un film de protection local ou couvrant entre l'optique et la face arrière de ce feuillet PVB avant. Par exemple un film plastique mince transparent et même à couche fonctionnelle.

La figure 4e est une vue montrant une étape de montage hors feuilletage de l'OLED avec l'optique de collimation et de redirection sur un premier feuillet PVB intercalaire de feuilletage dans le but de réaliser le toit vitré feuilleté avec liseuse intégrée selon l'invention.

Cette figure se différencie de la figure 4c en ce que l'optique de collimation 4 plus large que l'OLED est fixée contre la face avant du feuillet arrière par collage 52 avec ou sans espaceur.
Si on rajoute un troisième feuillet PVB coté surface de sortie (PVB avant) il faut utiliser un film de protection local ou couvrant entre l'optique et la face arrière de ce feuillet PVB avant. Par exemple un film plastique mince transparent et même à couche fonctionnelle.

La figure 4f est une vue montrant une étape de montage hors feuilletage de l'OLED avec l'optique de collimation et de redirection sur un premier feuillet PVB intercalaire de feuilletage dans le but de réaliser le toit vitré feuilleté avec liseuse intégrée selon l'invention.
Cette figure se différencie de la figure 4b en ce que le deuxième feuillet PVB comprend une ouverture borgne 25 on protège du fond l'optique 4 par un film de protection local dans l'ouverture.

La figure 5a est une vue montrant une étape de montage hors feuilletage de l'OLED avec l'optique de collimation et de redirection sur un premier feuillet PVB intercalaire de feuilletage dans le but de réaliser le toit vitré feuilleté avec liseuse intégrée selon l'invention.
Cette figure se différencie de la précédente en ce que le film de protection est collé au fond par collage ou mise en contact adhésif local (chauffage et/ou pression).

La figure 6a est une vue en coupe de la liseuse montée sur un toit vitré feuilleté selon l'invention.
Cette figure se différencie de la figure 1a en ce que la liseuse est en face F4. La surface arrière de l' OLED 3 est collée (colle etc 6) à la face F4.

La figure 6b est une vue en coupe de la liseuse montée sur un toit en vitrage simple selon l'invention.
Cette figure se différencie de la précédente en ce qu'un film de protection avant 7 sert aussi pour fixer l'ensemble OLED 3 et optique par colle 6.
Ce film 7 peut être local ou couvrant par exemple film avec couche fonctionnelle etc.

La figure 6c est une vue en coupe d'une variante de l'OLED monté sur un vitrage feuilleté selon l'invention.

Cette figure se différencie de la figure 6a en ce que l'optique est plus large que l' OLED 3 et est fixée par colle 6 à la face F4.

## Revendications

1. Toit vitré lumineux de véhicule notamment automobile comprenant :
- un premier vitrage transparent (1), en verre minéral ou organique, avec des faces principales (11, 12) dite faces F1 et F2, une tranche (10), et une direction dite de référence destinée à être l'horizontale entre l'avant et l'arrière du toit
- un élément électroluminescent (3) côté face F2 et apte à émettre de la lumière polychromatique du côté opposé à la face F2 dit côté intérieur, élément électroluminescent ayant une surface de sortie côté intérieur
- en regard dudit élément électroluminescent et côté intérieur, une optique de collimation (4), ayant une face arrière (40) côté surface de sortie et une face avant (40') opposée à la face arrière
**caractérisé en ce que** l'élément électroluminescent a une surface émettrice de longueur d'au moins 5cm et de largeur d'au moins 2cm, et est de préférence d'épaisseur E0 submillimétrique, avec un demi angle d'émission au sommet de 50° à 70°et une direction d'émission principale normale au plan dudit élément électroluminescent
et **en ce que** l'optique de collimation, en matière transparente, est de préférence d'épaisseur Ea submillimétrique, comporte un film optique ou un ensemble de films optiques chacun comportant sur une face avant opposée à la surface de sortie un réseau de motifs avec des sommets S et avec un pas T entre sommets qui est de 10µm à 500µm, l'optique de collimation comporte :
a) un premier film optique et de préférence unique, avec ledit réseau de motifs qui sont bidimensionnels,
b) ou un ensemble d'au moins deux films optiques qui sont prismatiques, de préférence d'au plus deux films optiques prismatiques, comportant dans cet ordre en s'éloignant de la surface de sortie:
- un premier film optique avec ledit réseau de motifs qui sont des prismes s'étendant longitudinalement suivant un premier axe,
- et en regard du premier film optique, un deuxième film optique avec un deuxième réseau de motifs qui sont des prismes, s'étendant longitudinalement suivant un deuxième axe formant un angle avec ledit premier axe de 90±10°, le premier ou le deuxième axe forme avec la direction de référence un angle d'au plus 10°
c) ou un premier film optique unique avec ledit réseau de motifs qui sont des prismes, s'étendant longitudinalement suivant un axe formant un angle d'au plus 10° avec la direction de référence
**en ce que** pour a) chaque motif bidimensionnel étant défini par un flanc et, dans un plan P normal au film optique le motif bidimensionnel présente un angle au sommet allant de 60 à 110°, chaque intersection du flanc avec le plan P formant avec le plan du film optique un angle allant de 30 à 55°,
**en ce que** pour b) et c) chaque prisme étant défini par deux faces longitudinales chaque prisme présente un angle au sommet allant de 60 à 110°, et chaque face longitudinale forme avec le plan du film optique prismatique un angle allant de 30 à 55°
et **en ce que** :
- de l'air est entre la surface de sortie et la face d'entrée du premier film optique prismatique de l'optique de collimation
- pour b) et c) de l'air est entre les prismes de la face avant de l'optique de collimation, les sommets des motifs de chaque face avant sont libres ou en contact physique avec un élément transparent
- pour a) les motifs bidimensionnels sont en creux, le réseau de motifs bidimensionnels est un réseau de cavités, les sommets S sont orientés vers la face F2 et la surface haute de chaque cavité est libre ou en contact physique avec un élément transparent, de l'air est dans les cavités ou les motifs bidimensionnels sont en reliefs, les sommets des motifs sont libres ou en contact physique avec un élément transparent, de l'air est entre les motifs bidimensionnels.

2. Toit vitré lumineux de véhicule selon la revendication précédente **caractérisé en ce qu'**il comprend une optique de redirection en regard de l'optique de collimation, l'optique de collimation est entre l'élément électroluminescent et l'optique de redirection, optique de redirection qui comporte un film optique de redirection ou un ensemble de films optiques de redirection chacun comportant sur une face avant opposée à la surface de sortie un réseau de prismes assymétriques avec des sommets et avec un pas T' entre sommets qui est de 10µm à 500µm, chaque prisme assymétrique étant défini par des première et deuxième faces longitudinales, chaque prisme assymétrique présente un angle au sommet allant de 50 à 60° et la première face longitudinale dit grand côté forme avec le plan du film optique de redirection assymétrique un premier angle allant de 31 à 41°.

3. Toit vitré lumineux de véhicule selon l'une des revendications précédentes **caractérisé en ce que** les motifs sont jointifs ou essentiellement jointifs.

4. Toit vitré lumineux de véhicule selon l'une des revendications précédentes **caractérisé en ce que** l'élément électroluminescent est une diode électroluminescente organique dit OLED notamment transparente (TOLED) ou une diode électroluminescente à point quantique dit QLED.

5. Toit vitré lumineux de véhicule selon l'une des revendications précédentes **caractérisé en ce que** le ou chaque film optique est un film plastique partiellement texturé dans son épaisseur ou avec une couche texturée.

6. Toit vitré lumineux de véhicule selon l'une des revendications précédentes **caractérisé en ce que** pour l'ensemble de films optiques a une épaisseur d'au plus 1mm ou d'au plus 0,6mm ou 0,3mm et même l'ensemble l'élément électroluminescent et films optiques a une épaisseur d'au plus 1mm ou d'au plus 0,6mm.

7. Toit vitré lumineux de véhicule selon l'une des revendications précédentes **caractérisé en ce que** l'élément électroluminescent, de préférence flexible, est un OLED qui est à émission par l'arrière comportant un support notamment plastique, qui porte côté face F2 dans cet ordre en s'éloignant du support : une sous couche fonctionnelle éventuelle, une anode transparente, un système électroluminescent organique, une cathode réfléchissante.

8. Toit vitré feuilleté lumineux de véhicule selon l'une des revendications précédentes **caractérisé en ce qu'**il comporte un élément de connexion électrique (35) dudit élément électroluminescent lié audit élément électroluminescent et dépassant de la tranche du premier vitrage.

9. Toit vitré lumineux de véhicule selon l'une des revendications précédentes **caractérisé en ce que** l'optique de collimation est contre ou fixée à l'élément électroluminescent, via sa face arrière, de préférence par un adhésif notamment transparent, en périphérie de la surface de sortie et/ou l'optique de collimation ou l'éventuelle optique de redirection est fixé à l'élément transparent, notamment par un adhésif de préférence transparent en périphérie de la face avant.

10. Toit vitré feuilleté lumineux de véhicule selon l'une des revendications précédentes **caractérisé en ce qu'**il comporte un vitrage feuilleté comportant :
- ledit premier vitrage transparent (1),
- un deuxième vitrage transparent (1') en verre minéral ou organique, avec des faces principales (13, 14) dites faces F3 et F4,
- entre les faces F2 et F3 qui sont les faces internes du vitrage feuilleté, un intercalaire de feuilletage transparent, éventuellement teinté et/ou éventuellement composite dans son épaisseur, en matière polymérique (2, 21, 22, 23), film intercalaire de feuilletage ayant une face principale FA côté face F2 et une face principale FB côté face F3, face FA qui est en contact adhésif avec la face F2 et face FB en contact adhésif avec la face F3.

11. Toit vitré lumineux de véhicule selon l'une des revendications précédentes **caractérisé en ce que** la face F2 est libre, le toit vitré est monolithique, l'élément électroluminescent est sur la face F2 ou si le vitrage est feuilleté et l'élément électroluminescent est sur la face F4 libre, l'optique de collimation est fixée, de préférence collée, à l'élément électroluminescent en périphérie de la surface de sortie, via sa face arrière et en périphérie, notamment par un adhésif de préférence transparent et/ou l'ensemble élément électroluminescent / optique de collimation /éventuelle optique de redirection est fixé en périphérie, de préférence collé, à la face libre F4 ou F2 via un film avant de protection qui est ledit élément transparent avec une partie dépassante de fixation et/ou l'élément électroluminescent est fixé de préférence collé par sa surface d'entrée à la face libre F4 ou F2.

12. Toit vitré lumineux de véhicule selon l'une des revendications 1 à 10 **caractérisé en ce qu'**il comporte un vitrage feuilleté comportant :
- ledit premier vitrage transparent (1),
- un deuxième vitrage transparent (1') en verre minéral ou organique, avec des faces principales (13, 14) dites faces F3 et F4,
- entre les faces F2 et F3 qui sont les faces internes du vitrage feuilleté, un intercalaire de feuilletage transparent, de préférence en PVB, éventuellement teinté et/ou éventuellement composite dans son épaisseur, en matière polymérique (2,21,22,23), film intercalaire de feuilletage ayant une face principale FA côté face F2 et une face principale FB côté face F3, face FA qui est en contact adhésif avec la face F2 et face FB qui est en contact adhésif avec la face F3, l'optique de collimation ou l'éventuelle optique de redirection est plus large que l'élément électroluminescent et est fixée en périphérie, de préférence collé par un adhésif notamment transparent, ou en périphérie est en contact adhésif via sa face arrière audit intercalaire de feuilletage.

13. Toit vitré lumineux de véhicule selon l'une des revendications 10 ou 12 **caractérisé en ce que** l'optique de collimation est entre la face F2 et F3, l'élément électroluminescent est entre la face F2 et F3 et dans la zone avec l'élément électroluminescent, la face FA est en contact adhésif avec la face F2 et éventuellement la face FB en contact adhésif avec la surface d'entrée, l'élément transparent étant le deuxième vitrage.

14. Toit vitré lumineux de véhicule selon l'une des revendications 10 ou 12 **caractérisé en ce que** l'optique de collimation est entre la face F2 et F3, l'élément électroluminescent est entre la face F2 et F3 et dans la zone avec l'élément électroluminescent la face FA en contact adhésif avec la face F2 ou du côté de la surface de sortie, et la face FB en contact adhésif avec la face F3 et l'élément transparent est un film de protection plastique (7), sur la face avant de l'optique de collimation ou de l'éventuelle optique de redirection, avec une face orientée vers la face F3 et en contact adhésif avec l'intercalaire de feuilletage, film de protection plastique étant local éventuellement avec une zone dite extension dépassant des bords de la face avant d'au plus 10cm.

15. Toit vitré lumineux de véhicule selon la revendication 14 **caractérisé en ce que** le film de protection local, notamment clair ou teinté, comporte un film plastique porteur d'une couche électroconductrice et en particulier fonctionnelle comme un bouton tactile capacitif pour allumer l'élément électroluminescent ou **en ce que** le film de protection est couvrant (7), notamment clair ou teinté, et comporte un film plastique porteur d'une couche électroconductrice et en particulier fonctionnelle : couche chauffante, couche de contrôle solaire ou base émissivité, bouton tactile capacitif pour allumer l'élément électroluminescent.

16. Toit vitré lumineux de véhicule selon l'une quelconque des revendications 10 et 12 à 15 **caractérisé en ce que** l'intercalaire de feuilletage est composite et comporte l'empilement suivant hors de zone de l'élément électroluminescent : PVB 1/film plastique fonctionnel avec un éventuel revêtement fonctionnel électroconducteur côté face F2 ou F3 /PVB2, le film plastique fonctionnel s'étendant sur la face F2,
et **en ce que** l'élément électroluminescent est entre la face F2 et F3, entre la face avant et la face F3 est présent ledit film plastique/ledit PVB2, l'élément transparent est ledit film plastique fonctionnel sur la face avant de l'optique de collimation ou de l'éventuelle optique de redirection.

17. Toit vitré lumineux de véhicule selon l'une quelconque des revendications 10 et 12 à 16 **caractérisé en ce que** l'intercalaire de feuilletage comporte un PVB acoustique et/ou est teinté, l'intercalaire de feuilletage notamment est un PVB au moins partiellement teinté dans son épaisseur, la partie teintée étant au moins entre l'élément électroluminescent et la face F2.

18. Toit vitré lumineux de véhicule selon l'une quelconque des revendications 10 et 12 à 17 **caractérisé en ce que** l'élément électroluminescent est logé dans une ouverture de l'intercalaire de feuilletage et de préférence l'optique de collimation et même l'éventuelle optique de redirection est logée dans ladite ouverture, l'ouverture est borgne avec un fond en direction de la face F2 et débouchante sur la face F3, ou l'ouverture dite interne est dans l'épaisseur de l'intercalaire de feuilletage et ledit élément transparent est un film de protection qui est local logé dans ladite ouverture interne ou qui est plus large que ladite ouverture interne et couvrant ladite ouverture interne.

19. Véhicule comportant au moins un toit vitré lumineux selon l'une quelconque des revendications précédentes.

20. Procédé de fabrication de toit vitré selon l'une des revendications précédentes de toit **caractérisé en ce qu'**il comporte l'étape suivante :
avant mise en place sur le premier vitrage, le prémontage sur l'élément électroluminescent de l'optique de collimation en film(s) voire de l'optique de redirection en film(s) et même d'un film de protection sur le dernier film optique de collimation ou de redirection, notamment par fixation périphérique même par collage périphérique formant éventuellement un scellage et de préférence pour tous les films collage périphérique.

21. Procédé de fabrication de toit vitré feuilleté selon l'une des revendications précédentes de toit vitré feuilleté **caractérisé en ce qu'**il comporte les étapes suivantes:
- positionnement de l'élément électroluminescent sur un feuillet intercalaire de feuilletage plein ou dans une ouverture borgne ou traversante et simultanément ou séparément positionnement de l'optique de collimation en regard de l'élément électroluminescent et de l'éventuelle optique de redirection sur l'optique de collimation et successivement :
- mise en place de l'ensemble positionné entre le premier et deuxième vitrage
- feuilletage avec mise sous vide et chauffage voire mise sous pression.

22. Procédé de fabrication de toit vitré feuilleté lumineux selon la revendication précédente **caractérisé en ce que** le positionnement de l'élément électroluminescent est sur ledit feuillet intercalaire de feuilletage dans une ouverture borgne ou traversante côté surface d'entrée, avec l'optique de collimation et l'éventuelle optique de redirection logée dans l'ouverture et fixée, et de préférence collée, en périphérie de la surface de sortie ou avec l'optique de collimation ou l'éventuelle optique de redirection capotant l'ouverture et sur ledit feuillet intercalaire de feuilletage.

23. Procédé de fabrication de toit vitré feuilleté lumineux selon la revendication 21 **caractérisé en ce que** le positionnement de l'élément électroluminescent est sur ledit feuillet intercalaire de feuilletage plein avec une aide au positionnement notamment un élément du côté de la face opposée de l'intercalaire de feuilletage et comportant un repère.

24. Procédé de fabrication de toit vitré feuilleté lumineux selon l'une des revendications 21 à 23 **caractérisé en ce que** ledit feuillet intercalaire est un feuillet PVB éventuellement acoustique ou est composite PVB/film plastique fonctionnel ou PVB/film plastique fonctionnel/PVB, le positionnement étant sur du PVB ou sur le film fonctionnel, de préférence le film fonctionnel est plein lorsque le PVB est troué.

25. Procédé de fabrication de toit vitré feuilleté lumineux selon l'une des revendications 21 à 24 **caractérisé en ce qu'**il comporte avant ledit positionnement, la fixation notamment par collage d'un film de protection local sur la face avant de l'optique de collimation ou de l'éventuelle optique de redirection et lors dudit positionnement ledit intercalaire de feuilletage a un trou borgne logeant le film de protection local ou ledit intercalaire de feuilletage a un trou traversant et un autre intercalaire de feuilletage ferme le trou.

26. Procédé de fabrication de toit vitré feuilleté lumineux selon l'une des revendications précédentes 21 à 25 **caractérisé en ce que**, ledit intercalaire de feuilletage ayant un trou traversant logeant l'élément électroluminescent et l'optique de collimation et l'éventuelle optique de redirection, le procédé comprend le placement d'un film de protection fermant ledit trou et d'un autre feuillet intercalaire couvrant le film de protection éventuellement déjà en contact adhésif avec le film de protection.

27. Procédé de fabrication du toit vitré feuilleté lumineux selon l'une des revendications 21 à 26 **caractérisé en ce qu'**il comprend la mise en contact adhésif ponctuel par chauffage hors zone élément électroluminescent :
- dudit feuillet intercalaire et d'un autre feuillet intercalaire dit arrière côté surface d'entrée
- et/ou dudit feuillet intercalaire et un autre feuillet intercalaire dit avant côté surface de sortie,
et/ou de l'optique de collimation ou de l'éventuelle optique de redirection avec le feuillet intercalaire ou un autre feuillet intercalaire
l'élément électroluminescent et même l'optique de collimation et même l'éventuelle optique de redirection étant dans un trou borgne ou traversant d'un desdits feuillets intercalaire et/ou l'élément électroluminescent et même l'optique de collimation et même l'éventuelle optique de redirection étant en sandwich entre ledit feuillet intercalaire et l'autre feuillet intercalaire arrière ou avant.

28. Procédé de fabrication du toit vitré feuilleté lumineux selon l'une des revendications 21 à 27 **caractérisé en ce qu'**il comprend la mise en contact adhésif ponctuel par chauffage de l'élément électroluminescent et dudit feuillet intercalaire et/ou dudit l'élément électroluminescent et d'un autre feuillet intercalaire.

## Patentansprüche

1. Fahrzeugsonnendach, insbesondere für ein Kraftfahrzeug, umfassend:
- eine erste transparente Verglasung (1) aus Mineral- oder organischem Glas mit Hauptflächen (11, 12), die als Fläche F1 und F2 bezeichnet werden, einer Kante (10) und einer als Bezugsrichtung bezeichneten Richtung, die als Horizontale zwischen der Vorder- und Rückseite des Daches vorgesehen ist
- ein Elektrolumineszenzelement (3) auf der Seite von Fläche F2, das in der Lage ist, polychromatisches Licht auf der der Fläche F2 gegenüberliegenden Seite, die als Innenseite bezeichnet wird, zu emittieren, wobei das Elektrolumineszenzelement eine Austrittsoberfläche auf der Innenseite aufweist
- gegenüber dem Elektrolumineszenzelement und auf der Innenseite eine Kollimationsoptik (4) mit einer rückseitigen Fläche (40) auf der Seite der Austrittsoberfläche und einer vorderseitigen Fläche (40') gegenüber der rückseitigen Fläche
**dadurch gekennzeichnet, dass** das Elektrolumineszenzelement eine emittierende Oberfläche mit einer Länge von mindestens 5 cm und einer Breite von mindestens 2 cm aufweist und vorzugsweise einer Dicke E0 im Submillimeterbereich, mit einem Emissionshalbwinkel am Scheitelpunkt von 50° bis 70° und einer Hauptemissionsrichtung senkrecht zur Ebene des Elektrolumineszenzelements
und **dass** die Kollimationsoptik aus transparentem Material vorzugsweise eine Dicke Ea im Submillimeterbereich aufweist, einen optischen Film oder eine Gesamtheit optischer Filme umfasst, die jeweils auf einer vorderseitigen Fläche, die der Austrittsoberfläche gegenüberliegt, eine Anordnung von Motiven mit Scheitelpunkten S und mit einem Abstand T zwischen Scheitelpunkten von 10 µm bis 500 µm aufweist, wobei die Kollimationsoptik umfasst:
a) einen ersten und vorzugsweise einzigen optischen Film mit der Anordnung von Motiven, die zweidimensional sind,
b) oder eine Gesamtheit von mindestens zwei optischen Filmen, die prismatisch sind, vorzugsweise von höchstens zwei prismatischen optischen Filmen, umfassend in dieser Reihenfolge von der Austrittsoberfläche ausgehend:
- einen ersten optischen Film mit der Anordnung von Motiven, bei denen es sich um Prismen handelt, die sich in Längsrichtung entlang einer ersten Achse erstrecken,
- und gegenüber der ersten optischen Schicht eine zweite optische Schicht mit einer zweiten Anordnung von Motiven, bei denen es sich um Prismen handelt, die sich in Längsrichtung entlang einer zweiten Achse erstreckt, die mit der ersten Achse einen Winkel von 90±10° bildet, wobei die erste oder die zweite Achse mit der Bezugsrichtung einen Winkel von höchstens 10° bildet
c) oder einen einzelnen ersten optischen Film mit der Anordnung von Motiven, die Prismen sind, die sich in Längsrichtung entlang einer Achse erstrecken, die einen Winkel von höchstens 10° mit der Bezugsrichtung bildet
**dass** für a) jedes zweidimensionale Motiv durch eine Flanke definiert ist und das zweidimensionale Motiv in einer Ebene P senkrecht zum optischen Film einen Scheitelwinkel von 60 bis 110° darstellt, wobei jeder Schnittpunkt der Flanke mit der Ebene P einen Winkel von 30 bis 55° mit der Ebene des optischen Films bildet,
**dass** für b) und c) jedes Prisma durch zwei Längsflächen definiert ist, wobei jedes Prisma einen Scheitelwinkel von 60 bis 110° darstellt und jede Längsfläche mit der Ebene des prismatischen optischen Films einen Winkel von 30 bis 55° bildet
und **dass:**
- sich Luft zwischen der Austrittsoberfläche und der Eintrittsoberfläche des ersten prismatischen optischen Films der Kollimationsoptik befindet
- für b) und c) sich Luft zwischen den Prismen der vorderseitigen Fläche der Kollimationsoptik befindet, die Scheitelpunkte der Motive jeder vorderseitigen Fläche frei oder in physischem Kontakt mit einem transparenten Element sind
- für a) die zweidimensionalen Motive hohl sind, die Gesamtheit der zweidimensionalen Motive eine Gesamtheit von Hohlräumen ist, die Scheitelpunkte S in Richtung der Fläche F2 ausgerichtet sind, und die obere Oberfläche jedes Hohlraums frei oder in physischem Kontakt mit einem transparenten Element ist, sich Luft in den Hohlräumen befindet oder die zweidimensionalen Motive reliefartig sind, die Scheitelpunkte der Motive frei oder in physischem Kontakt mit einem transparenten Element sind, sich Luft zwischen den zweidimensionalen Motiven befindet.

2. Fahrzeugsonnendach für ein Fahrzeug nach vorstehendem Anspruch, **dadurch gekennzeichnet, dass** es eine Umlenkoptik umfasst, die der Kollimationsoptik gegenüberliegt, wobei sich die Kollimationsoptik zwischen dem Elektrolumineszenzelement und der Umlenkoptik befindet, wobei die Umlenkoptik einen optischen Umlenkfilm oder eine Gesamtheit optischer Umlenkfilme umfasst, die jeweils auf einer der Austrittsoberfläche gegenüberliegenden vorderseitigen Fläche eine Anordnung asymmetrischer Prismen mit Scheitelpunkten und mit einem Abstand T' zwischen Scheitelpunkten von 10 µm bis 500 µm umfassen, wobei jedes asymmetrische Prisma durch eine erste und eine zweite Längsfläche definiert ist, jedes asymmetrische Prisma einen Winkel am Scheitelpunkt von 50 bis 60° darstellt und die erste Längsfläche, die als große Seite bezeichnet wird, mit der Ebene des asymmetrischen optischen Umlenkfilms einen ersten Winkel von 31 bis 41° bildet.

3. Fahrzeugsonnendach für ein Fahrzeug nach einem der vorstehenden Ansprüche, **dadurch gekennzeichnet, dass** die Motive zusammenhängend oder im Wesentlichen zusammenhängend sind.

4. Fahrzeugsonnendach für ein Fahrzeug nach einem der vorstehenden Ansprüche, **dadurch gekennzeichnet, dass** das Elektrolumineszenzelement eine als OLED bezeichnete organische Elektrolumineszenzdiode, insbesondere transparent (TOLED), oder eine als QLED bezeichnete Quantenpunkt-Elektrolumineszenzdiode ist.

5. Fahrzeugsonnendach für ein Fahrzeug nach einem der vorstehenden Ansprüche, **dadurch gekennzeichnet, dass** der oder jeder optische Film ein Kunststofffilm ist, der in seiner Dicke teilweise texturiert ist oder eine texturierte Schicht aufweist.

6. Fahrzeugsonnendach für ein Fahrzeug nach einem der vorstehenden Ansprüche, **dadurch gekennzeichnet, dass** die Gesamtheit optischer Filme eine Dicke von höchstens 1 mm oder höchstens 0,6 mm oder 0,3 mm aufweist und sogar die Gesamtheit von Elektrolumineszenzelement und optischen Filmen eine Dicke von höchstens 1 mm oder höchstens 0,6 mm aufweist.

7. Fahrzeugsonnendach für ein Fahrzeug nach einem der vorstehenden Ansprüche, **dadurch gekennzeichnet, dass** das vorzugsweise flexible Elektrolumineszenzelement eine rückseitig emittierende OLED ist, die einen Träger, insbesondere einen Kunststoffträger, umfasst, der auf der Seite von Fläche F2 in dieser Reihenfolge vom Träger ausgehend trägt: eine eventuelle untere Funktionsschicht, eine transparente Anode, ein organisches Elektrolumineszenzsystem, eine reflektierende Kathode.

8. Fahrzeugsonnendach nach einem der vorstehenden Ansprüche, **dadurch gekennzeichnet, dass** es ein elektrisches Anschlusselement (35) für das Elektrolumineszenzelement umfasst, das mit dem Elektrolumineszenzelement verbunden ist und von der Kante der ersten Verglasung vorsteht.

9. Fahrzeugsonnendach nach einem der vorstehenden Ansprüche, **dadurch gekennzeichnet, dass** die Kollimationsoptik am Elektrolumineszenzelement über ihre rückseitige Fläche, vorzugsweise durch einen Kleber, insbesondere einen transparenten Kleber, am Umfang der Austrittsoberfläche befestigt ist oder daran anliegt und/oder die Kollimationsoptik oder die eventuelle Umlenkoptik am transparenten Element insbesondere durch einen Kleber, vorzugsweise einen transparenten Kleber, am Umfang der vorderseitigen Fläche befestigt ist.

10. Fahrzeugsonnendach nach einem der vorstehenden Ansprüche, **dadurch gekennzeichnet, dass** es eine Verbundverglasung umfasst, umfassend:
- die erste transparente Verglasung (1),
- eine zweite transparente Verglasung (1') aus Mineral- oder organischem Glas, deren Hauptflächen (13, 14) als Fläche F3 und F4 bezeichnet werden,
- zwischen Fläche F2 und F3, die Innenflächen der Verbundverglasung sind, eine transparente Verbundzwischenschicht aus Polymermaterial (2, 21, 22, 23), die eventuell getönt und/oder eventuell in ihrer Dicke zusammengesetzt ist, wobei der Verbundzwischenschichtfilm eine Hauptfläche FA auf der Seite von Fläche F2 und eine Hauptfläche FB auf der Seite von Fläche F3 aufweist, wobei Fläche FA in Klebekontakt mit Fläche F2 ist und Fläche FB in Klebekontakt mit Fläche F3 ist.

11. Fahrzeugsonnendach nach einem der vorstehenden Ansprüche, **dadurch gekennzeichnet, dass** die Fläche F2 frei ist, das Glasdach monolithisch ist, das Elektrolumineszenzelement auf der Fläche F2 liegt oder, wenn es sich um eine Verbundverglasung handelt und das Elektrolumineszenzelement auf der freien Fläche F4 liegt, die Kollimationsoptik mit dem Elektrolumineszenzelement am Umfang der Austrittsoberfläche über ihre rückseitige Fläche und am Umfang befestigt, vorzugsweise verklebt, ist, insbesondere durch einen vorzugsweise transparenten Kleber, und/oder die Gesamtheit aus Elektrolumineszenzelement / Kollimationsoptik / eventueller Umlenkoptik am Umfang mit der freien Fläche F4 oder F2 befestigt, vorzugsweise verklebt, ist über einen vorderen Schutzfilm, bei dem es sich um das transparente Element handelt, wobei ein Befestigungsteil vorsteht, und/oder das Elektrolumineszenzelement mit seiner Eintrittsoberfläche an der freien Fläche F4 oder F2 befestigt, vorzugsweise verklebt, ist.

12. Fahrzeugsonnendach nach einem der Ansprüche 1 bis 10, **dadurch gekennzeichnet, dass** es eine Verbundverglasung umfasst, umfassend:
- die erste transparente Verglasung (1),
- eine zweite transparente Verglasung (1') aus Mineral- oder organischem Glas, deren Hauptflächen (13, 14) als Fläche F3 und F4 bezeichnet werden,
- zwischen Fläche F2 und F3, bei denen es sich um die Innenseiten der Verbundverglasung handelt, eine transparente Verbundzwischenschicht, vorzugsweise aus PVB, aus polymerem Material (2, 21, 22, 23), die eventuell getönt und/oder eventuell in ihrer Dicke zusammengesetzt ist, wobei der Verbundzwischenschichtfilm eine Hauptfläche FA auf der Seite von Fläche F2 und eine Hauptfläche FB auf der Seite von Fläche F3 aufweist, Fläche FA, die mit Fläche F2 in Klebekontakt steht, und Fläche FB, die mit Fläche F3 in Klebekontakt steht, wobei die Kollimationsoptik oder die eventuelle Umlenkoptik breiter als das Elektrolumineszenzelement ist und am Umfang befestigt, vorzugsweise durch einen insbesondere transparenten Klebstoff verklebt ist, oder am Umfang über ihre rückseitige Fläche in Klebekontakt mit der Verbundzwischenschicht steht.

13. Fahrzeugsonnendach nach einem der Ansprüche 10 oder 12, **dadurch gekennzeichnet, dass** sich die Kollimationsoptik zwischen Fläche F2 und F3 befindet, sich das Elektrolumineszenzelement zwischen Fläche F2 und F3 und in der Zone mit dem Elektrolumineszenzelement befindet, Fläche FA in Klebekontakt mit Fläche F2 steht und eventuell Fläche FB in Klebekontakt mit der Eintrittsoberfläche steht, wobei das transparente Element die zweite Verglasung ist.

14. Fahrzeugsonnendach nach einem der Ansprüche 10 oder 12, **dadurch gekennzeichnet, dass** sich die Kollimationsoptik zwischen Fläche F2 und F3 befindet, sich das Elektrolumineszenzelement zwischen Fläche F2 und F3 und in der Zone mit dem Elektrolumineszenzelement befindet, Fläche FA in Klebekontakt mit Fläche F2 steht oder auf der Seite der Austrittsoberfläche und Fläche FB in Klebekontakt mit Fläche F3 steht und das transparente Element ein Kunststoffschutzfilm (7) ist, auf der vorderseitigen Fläche der Kollimationsoptik oder der eventuellen Umlenkoptik, wobei eine Fläche zu Fläche F3 ausgerichtet ist und in Klebekontakt mit der Verbundzwischenschicht steht, wobei der Kunststoffschutzfilm lokal ist, eventuell mit einer so genannten Erweiterungszone, die von den Rändern der vorderseitige Fläche höchstens 10 cm vorsteht.

15. Fahrzeugsonnendach nach Anspruch 14, **dadurch gekennzeichnet, dass** der lokale Schutzfilm, insbesondere klar oder getönt, einen Kunststofffilm umfasst, der eine elektrisch leitfähige und insbesondere funktionelle Schicht wie einen kapazitiven Taster zum Einschalten des Elektrolumineszenzelements trägt, oder **dass** der Schutzfilm abdeckend (7) ist, insbesondere klar oder getönt, und einen Kunststofffilm umfasst, der eine elektrisch leitfähige und insbesondere funktionelle Schicht trägt: Heizschicht, Sonnenschutzschicht oder mit geringer Emissivität, kapazitiver Taster zum Einschalten des Elektrolumineszenzelements.

16. Fahrzeugsonnendach nach einem der Ansprüche 10 und 12 bis 15, **dadurch gekennzeichnet, dass** die Verbundzwischenschicht zusammengesetzt ist und außerhalb der Zone des Elektrolumineszenzelements folgenden Stapel aufweist: PVB1 / funktioneller Kunststofffilm mit einer eventuellen elektrisch leitfähigen funktionellen Beschichtung auf der Seite von Fläche F2 oder F3 / PVB2, wobei sich der funktionelle Kunststofffilm über die Fläche F2 erstreckt,
und **dass** sich das Elektrolumineszenzelement zwischen Fläche F2 und F3 befindet, zwischen der vorderseitigen Fläche und Fläche F3 der Kunststofffilm / das PVB2 vorhanden ist, das transparente Element der funktionelle Kunststofffilm auf der vorderseitigen Fläche der Kollimationsoptik oder der eventuellen Umlenkoptik ist.

17. Fahrzeugsonnendach nach einem der Ansprüche 10 und 12 bis 16, **dadurch gekennzeichnet, dass** die Verbundzwischenschicht einen akustischen PVB umfasst und/oder getönt ist, wobei die Verbundzwischenschicht insbesondere ein PVB ist, das zumindest teilweise in seiner Dicke getönt ist, wobei der getönte Teil mindestens zwischen dem Elektrolumineszenzelement und Fläche F2 liegt.

18. Fahrzeugsonnendach nach einem der Ansprüche 10 und 12 bis 17, **dadurch gekennzeichnet, dass** das Elektrolumineszenzelement in einer Öffnung der Verbundzwischenschicht aufgenommen ist und vorzugsweise die Kollimationsoptik und sogar die eventuelle Umlenkoptik in der Öffnung aufgenommen sind, die Öffnung eine Blindöffnung mit einem Boden in Richtung von Fläche F2 ist und in Fläche F3 mündet oder sich die so genannte innere Öffnung in der Dicke der Verbundzwischenschicht befindet und das transparente Element ein Schutzfilm ist, der lokal in der inneren Öffnung aufgenommen ist oder der breiter als die innere Öffnung ist und die innere Öffnung bedeckt.

19. Fahrzeug mit mindestens einem Sonnendach nach einem der vorstehenden Ansprüche.

20. Verfahren zur Herstellung eines Glasdaches nach einem der vorstehenden Ansprüche für das Dach, **dadurch gekennzeichnet, dass** es den folgenden Schritt umfasst:
vor dem Platzieren auf der ersten Verglasung die Vormontage auf dem Elektrolumineszenzelement der Kollimationsoptik in Form eines Filmes (von Filmen) oder sogar der Umlenkoptik in Form eines Filmes (von Filmen) und sogar eines Schutzfilms auf dem letzten Kollimationsoptik- oder Umlenkoptikfilm, insbesondere durch umlaufende Befestigung, selbst durch umlaufende Verklebung, eventuell unter Bildung einer Versiegelung, und vorzugsweise umlaufende Verklebung für alle Filme.

21. Verfahren zur Herstellung eines Verbundglasdaches nach einem der vorstehenden Ansprüche für das Verbundglasdach, **dadurch gekennzeichnet, dass** es die folgenden Schritte umfasst:
- Positionieren des Elektrolumineszenzelements auf einer massiven Verbundzwischenschichtlage oder in einer Blind- oder Durchgangsöffnung und gleichzeitiges oder getrenntes Positionieren der Kollimationsoptik in Bezug auf das Elektrolumineszenzelement und der eventuellen Umlenkoptik auf der Kollimationsoptik und nacheinander:
- Platzieren der positionierten Gesamtheit zwischen der ersten und zweiten Verglasung
- Laminieren unter Vakuum und Erwärmung oder sogar Druckbeaufschlagung.

22. Verfahren zur Herstellung eines Verbundglassonnendaches nach vorstehendem Anspruch, **dadurch gekennzeichnet, dass** das Positionieren des Elektrolumineszenzelements auf der Verbundzwischenschichtlage in einer Blind- oder Durchgangsöffnung auf der Seite der Eintrittsoberfläche erfolgt, wobei die Kollimationsoptik und die eventuelle Umlenkoptik in der Öffnung aufgenommen und am Umfang der Austrittsoberfläche befestigt und vorzugsweise verklebt sind, oder wobei die Kollimationsoptik oder die eventuelle Umlenkoptik die Öffnung abdeckt und auf der Verbundzwischenschichtlage liegt.

23. Verfahren zur Herstellung eines Verbundglassonnendaches nach Anspruch 21, **dadurch gekennzeichnet, dass** das Positionieren des Elektrolumineszenzelements auf der massiven Verbundzwischenschichtlage mit einer Positionierungshilfe erfolgt, insbesondere einem Element, das sich auf der Seite der der Verbundzwischenschicht gegenüberliegenden Fläche befindet und eine Referenzmarke aufweist.

24. Verfahren zur Herstellung eines Verbundglassonnendaches nach einem der Ansprüche 21 bis 23, **dadurch gekennzeichnet, dass** die Zwischenschichtlage eine eventuell akustische PVB-Lage oder eine Zusammensetzung aus PVB / funktionellem Kunststofffilm oder PVB / funktionellem Kunststofffilm / PVB ist, wobei das Positionieren auf PVB oder auf dem funktionellen Film erfolgt, wobei der funktionelle Film vorzugsweise massiv ist, wenn das PVB perforiert ist.

25. Verfahren zur Herstellung eines Verbundglassonnendaches nach einem der Ansprüche 21 bis 24, **dadurch gekennzeichnet, dass** es vor dem Positionieren das Befestigen, insbesondere durch Verkleben, eines lokalen Schutzfilms auf der vorderseitigen Fläche der Kollimationsoptik oder der eventuellen Umlenkoptik umfasst und während des Positionierens die Verbundzwischenschicht ein Blindloch aufweist, das den lokalen Schutzfilm aufnimmt, oder die Verbundzwischenschicht ein Durchgangsloch aufweist und eine weitere Verbundzwischenschicht das Loch verschließt.

26. Verfahren zur Herstellung eines Verbundglassonnendaches nach einem der vorstehenden Ansprüche 21 bis 25, **dadurch gekennzeichnet, dass** die Verbundzwischenschicht ein Durchgangsloch aufweist, welches das Elektrolumineszenzelement und die Kollimationsoptik und die eventuelle Umlenkoptik aufnimmt, wobei das Verfahren das Platzieren eines Schutzfilms, der das Loch verschließt, und einer weiteren Zwischenschichtlage, die den Schutzfilm bedeckt und eventuell bereits in Klebekontakt mit dem Schutzfilm steht, umfasst.

27. Verfahren zur Herstellung des Verbundglassonnendaches nach einem der Ansprüche 21 bis 26, **dadurch gekennzeichnet, dass** es das punktuelle Inkontaktbringen durch Erwärmen außerhalb der Elektrolumineszenzelementzone umfasst:
- der Zwischenschichtlage und einer weiteren Zwischenschichtlage, die als rückseitige Zwischenschichtlage auf der Seite der Eintrittsoberfläche bezeichnet wird
- und/oder der Zwischenschichtlage und einer weiteren Zwischenschichtlage, die als vorderseitige Zwischenschichtlage auf der Seite der Austrittsoberfläche bezeichnet wird,
und/oder der Kollimationsoptik oder der eventuellen Umlenkoptik mit der Zwischenschichtlage oder einer anderen Zwischenschichtlage
wobei sich das Elektrolumineszenzelement und sogar die Kollimationsoptik und sogar die eventuelle Umlenkoptik in einem Blindloch oder Durchgangsloch einer der Zwischenschichtlagen befinden und/oder das Elektrolumineszenzelement und sogar die Kollimationsoptik und sogar die eventuelle Umlenkoptik zwischen der Zwischenschichtlage und der weiteren rückseitigen oder vorderseitigen Zwischenschichtlage eingeschlossen sind.

28. Verfahren zur Herstellung des Verbundglassonnendaches nach einem der Ansprüche 21 bis 27, **dadurch gekennzeichnet, dass** es den Punktklebstoffkontakt durch Erhitzen des Elektrolumineszenzelements und der Zwischenschicht und/oder des Elektrolumineszenzelements und einer weiteren Zwischenschicht umfasst.

## Claims

1. A luminous glazed roof for a vehicle and in particular a motor vehicle, said roof comprising:
- a first transparent glazing (1), made of mineral or organic glass, with main faces (11, 12) called faces F1 and F2, an edge face (10), and a so-called reference direction that is intended to be the horizontal between the front and the rear of the roof
- a light-emitting element (3) face-F2 side and able to emit polychromatic light on the side opposite to face F2, which is called the interior side, said light-emitting element having an exit surface interior-side
- facing said light-emitting element and interior-side, a collimation optic (4) having a rear face (40) exit-surface side and a front face (40') opposite to the rear face **characterized in that** the light-emitting element has an emitting area of length of at least 5 cm and of width of at least 2 cm, and is preferably of submillimeter-sized thickness E0, with an emission half angle at the apex of 50° to 70° and a main emission direction normal to the plane of said light-emitting element
and **in that** the collimation optic, which is made of transparent material, is preferably of submillimeter-sized thickness Ea, includes an optical film or a set of optical films each including on a front face opposite to the exit surface an array of features with apexes S and with a pitch T between apexes that is from 10 µm to 500 µm, the collimation optic includes:
a) a first and preferably single optical film, with said array of features that are two-dimensional,
b) or a set of at least two optical films that are prismatic, preferably of at most two prismatic optical films, including in this order starting from the exit surface:
- a first optical film with said array of features that are prisms extending longitudinally along a first axis,
- and, facing the first optical film, a second optical film with a second array of features that are prisms extending longitudinally along a second axis making an angle to said first axis of 90±10°, the first or the second axis makes to the reference direction an angle of at most 10°
c) or a single first optical film with said array of features that are prisms extending longitudinally along an axis making an angle of at most 10° to the reference direction
**in that** for a) each two-dimensional feature being defined by a flank and in a plane P normal to the optical film each two-dimensional feature has an angle at the apex ranging from 60 to 110°, each intersection of the flank with the plane P making to the plane of the optical film an angle ranging from 30 to 55°,
**in that** for b) and c) each prism being defined by two longitudinal faces each prism has an angle at the apex ranging from 60 to 110°, and each longitudinal face makes to the plane of the prismatic optical film an angle ranging from 30 to 55° and **in that**:
- air is between the exit surface and the entrance face of the prismatic first optical film of the collimation optic
- for b) and c) air is between the prisms of the front face of the collimation optic, the apexes of the features of each front face are free or make physical contact with a transparent element
- for a) the two-dimensional features are recessed, the array of two-dimensional features is an array of cavities, the apexes S are oriented toward face F2 and the top surface of each cavity is free or makes physical contact with a transparent element, air is in the cavities or the two-dimensional features are raised, the apexes of the features are free or make physical contact with a transparent element, air is between the two-dimensional features.

2. The luminous glazed vehicle roof as claimed in the preceding claim, **characterized in that** it comprises a redirection optic facing the collimation optic, the collimation optic is between the light-emitting element and the redirection optic, which redirection optic includes a redirection optical film or a set of redirection optical films each including on a front face opposite to the exit surface an array of asymmetric prisms with apexes and with a pitch T' between apexes that is from 10 µm to 500 µm, each asymmetric prism being defined by first and second longitudinal faces, each asymmetric prism has an angle at the apex ranging from 50 to 60° and the first longitudinal face, called the long side, makes to the plane of the asymmetric redirection optical film a first angle ranging from 31 to 41°.

3. The luminous glazed vehicle roof as claimed in one of the preceding claims, **characterized in that** the features are contiguous or essentially contiguous.

4. The luminous glazed vehicle roof as claimed in one of the preceding claims, **characterized in that** the light-emitting element is an organic light-emitting diode, i.e. a so-called OLED, in particular a transparent organic light-emitting diode (TOLED) or a quantum-dot light-emitting diode, i.e. a so-called QLED.

5. The luminous glazed vehicle roof as claimed in one of the preceding claims, **characterized in that** the or each optical film is a plastic film that is partially textured in its thickness or with a textured layer.

6. The luminous glazed vehicle roof as claimed in one of the preceding claims, **characterized in that** for the set of optical films has a thickness of at most 1 mm or of at most 0.6 mm or 0.3 mm and even the assembly consisting of the light-emitting element and the optical films has a thickness of at most 1 mm or of at most 0.6 mm.

7. The luminous glazed vehicle roof as claimed in one of the preceding claims, **characterized in that** the light-emitting element, which is preferably flexible, is a back-emitting OLED including an in particular plastic carrier that bears, face-F2 side, in this order starting from the carrier: an optional functional underlayer, a transparent anode, an organic light-emitting system, a reflective cathode.

8. The luminous laminated glazed vehicle roof as claimed in one of the preceding claims, **characterized in that** it includes an element (35) for electrically connecting said light-emitting element, which is connected to said light-emitting element and which extends beyond the edge face of the first glazing.

9. The luminous glazed vehicle roof as claimed in one of the preceding claims, **characterized in that** the collimation optic is against or fastened to the light-emitting element, via its rear face, preferably by an in particular transparent adhesive, on the periphery of the exit surface and/or the collimation optic or the optional redirection optic is fastened to the transparent element, in particular by a preferably transparent adhesive on the periphery of the front face.

10. The luminous laminated glazed vehicle roof as claimed in one of the preceding claims, **characterized in that** it includes a laminated glazing including:
- said first transparent glazing (1),
- a second transparent glazing (1') made of mineral or organic glass, with main faces (13, 14) called faces F3 and F4,
- between the faces F2 and F3, which are the internal faces of the laminated glazing, a transparent lamination interlayer (2, 21, 22, 23) that is optionally tinted and/or optionally composite in its thickness, made of polymeric material, this lamination interlayer film having a main face FA face-F2 side and a main face FB face-F3 side, face FA making adhesive contact with face F2 and face FB making adhesive contact with face F3.

11. The luminous glazed vehicle roof as claimed in one of the preceding claims, **characterized in that** face F2 is free, the glazed roof is monolithic, the light-emitting element is on face F2 or if the glazing is laminated and the light-emitting element is on the free face F4, the collimation optic is fastened, preferably adhesively bonded, to the light-emitting element on the periphery of the exit surface, via its rear face and on its periphery, in particular by a preferably transparent adhesive and/or the assembly consisting of the light-emitting element/collimation optic/optional redirection optic is fastened on its periphery, preferably adhesively bonded, to the free face F4 or F2 via a front protective film that is said transparent element with a protruding fastening portion and/or the light-emitting element is fastened, preferably adhesively bonded, via its entrance surface to the free face F4 or F2.

12. The luminous glazed vehicle roof as claimed in one of claims 1 to 10, **characterized in that** it includes a laminated glazing including:
- said first transparent glazing (1),
- a second transparent glazing (1') made of mineral or organic glass, with main faces (13, 14) called faces F3 and F4,
- between the faces F2 and F3, which are the internal faces of the laminated glazing, a transparent lamination interlayer, which is preferably made of PVB, which is optionally tinted and/or optionally composite in its thickness, made of polymeric material (2, 21, 22, 23), said lamination interlayer film having a main face FA face-F2 side and a main face FB face-F3 side, which face FA makes adhesive contact with the face F2, and which face FB makes adhesive contact with the face F3, the collimation optic or the optional redirection optic is larger than the light-emitting element and is fastened on its periphery and preferably adhesively bonded by an in particular transparent adhesive to, or on its periphery makes adhesive contact via its rear face with, said lamination interlayer.

13. The luminous glazed vehicle roof as claimed in either of claims 10 and 12, **characterized in that** the collimation optic is between face F2 and F3, the light-emitting element is between face F2 and F3 and in the zone with the light-emitting element, the face FA makes adhesive contact with face F2 and optionally the face FB makes adhesive contact with the entrance surface, the transparent element being the second glazing.

14. The luminous glazed vehicle roof as claimed in either of claims 10 and 12, **characterized in that** the collimation optic is between face F2 and F3, the light-emitting element is between face F2 and F3 and in the zone with the light-emitting element the face FA makes adhesive contact with face F2 or on the side of the exit surface, and the face FB in adhesive contact with the face F3 and the transparent element is a plastic protective film (7), on the front face of the collimation optic or of the optional redirection optic, with a face oriented toward the face F3 and in adhesive contact with the lamination interlayer, said plastic protective film being local optionally with a so-called extension zone extending beyond the edges of the front face by at most 10 cm.

15. The luminous glazed vehicle roof as claimed in claim 14, **characterized in that** the local protective film, which is in particular clear or tinted, includes a plastic film bearing an electrically conductive and in particular functional layer such as a capacitive touch button for turning on the light-emitting element or **in that** the protective film is covering (7), and in particular clear or tinted, and includes a plastic film bearing an electrically conductive and in particular functional layer: heating layer, solar-control or low-emissivity layer, capacitive touch button for turning on the light-emitting element.

16. The luminous glazed vehicle roof as claimed in any one of claims 10 and 12 to 15, **characterized in that** the lamination interlayer is composite and includes the following stack outside of the zone of the light-emitting element: PVB 1/functional plastic film with an optional electrically conductive functional coating face-F2 or face-F3 side/PVB2, the functional plastic film extending over face F2,
and **in that** the light-emitting element is between the face F2 and F3, between the front face and face F3 is present said plastic film/said PVB2, and the transparent element is said functional plastic film on the front face of the collimation optic or the optional redirection optic.

17. The luminous glazed vehicle roof as claimed in any one of claims 10 and 12 to 16, **characterized in that** the lamination interlayer includes an acoustic PVB and/or is tinted, the lamination interlayer in particular is a PVB that is at least partially tinted in its thickness, the tinted portion being at least between the light-emitting element and face F2.

18. The luminous glazed vehicle roof as claimed in any one of claims 10 and 12 to 17, **characterized in that** the light-emitting element is housed in an aperture of the lamination interlayer and preferably the collimation optic and even the optional redirection optic is housed in said aperture, the aperture is blind with a bottom in the direction of the face F2 and emerges onto face F3, or the aperture is a so-called internal aperture and is in the thickness of the lamination interlayer and said transparent element is a protective film that is local, housed in said internal aperture, or that is larger than said internal aperture and covering said internal aperture.

19. A vehicle including at least one luminous glazed roof as claimed in any one of the preceding claims.

20. A process for manufacturing a glazed roof as claimed in one of the preceding roof claims, **characterized in that** it includes the following step:
before installation in the first glazing, pre-mounting on the light-emitting element of the film-based collimation optic or even of the film-based redirection optic and even of a protective film on the last redirection or collimation optical film, in particular by peripheral fastening and even by peripheral adhesive bonding optionally forming a seal and preferably for all the films peripheral adhesive bonding.

21. A process for manufacturing the laminated glazed roof as claimed in one of the preceding laminated glazed roof claims, **characterized in that** it includes the following steps:
- positioning the light-emitting element on an unapertured lamination interlayer sheet or in a through- or blind aperture and simultaneously or separately positioning the collimation optic facing the light-emitting element and the optional redirection optic on the collimation optic
and successively:
- installing the assembly positioned between the first and second glazing
- laminating under vacuum and with heating or even under pressure.

22. The luminous laminated glazed roof manufacturing process as claimed in the preceding claim, **characterized in that** the light-emitting element is positioned on said lamination-interlayer sheet in a through- or blind aperture entrance-surface side, with the collimation optic and the optional redirection optic housed in the aperture and fastened, and preferably adhesively bonded, on the periphery of the exit surface or with the collimation optic or the optional redirection optic capping the aperture and on said lamination-interlayer sheet.

23. The luminous laminated glazed roof manufacturing process as claimed in claim 21, **characterized in that** the light-emitting element is positioned on said unapertured lamination interlayer sheet with a positioning aid in particular an element on the side of the opposite face of the lamination interlayer and including a reference mark.

24. The luminous laminated glazed roof manufacturing process as claimed in one of claims 21 to 23, **characterized in that** said interlayer sheet is an optionally acoustic PVB sheet or is a PVB/functional plastic film or PVB/functional plastic film/PVB composite, the positioning being on the PVB or on the functional film, the functional film preferably being unapertured when the PVB is apertured.

25. The luminous laminated glazed roof manufacturing process as claimed in one of claims 21 to 24, **characterized in that** it includes, before said positioning, fastening, in particular by adhesive bonding, a local protective film to the front face of the collimation or optional redirection optic and during said positioning said lamination interlayer has a blind hole housing the local protective film or said lamination interlayer has a through-hole and another lamination interlayer closes the hole.

26. The luminous laminated glazed roof manufacturing process as claimed in one of preceding claims 21 to 25, **characterized in that** said lamination interlayer having a through-hole housing the light-emitting element, and the collimation optic and the optional redirection optic, the process comprises placing a protective film closing said hole and another interlayer sheet covering the protective film optionally already in adhesive contact with the protective film.

27. The luminous laminated glazed roof manufacturing process as claimed in one of claims 21 to 26, **characterized in that** it comprises creating point adhesive contact by heating outside of the zone of the light-emitting element:
- between said interlayer sheet and another so-called rear interlayer sheet entrance-surface side
- and/or between said interlayer sheet and another so-called front interlayer sheet exit-surface side,
- and/or between the collimation optic or optional redirection optic and the interlayer sheet or another interlayer sheet
the light-emitting element and even the collimation optic and even the optional redirection optic being in a through- or blind hole of one of said interlayer sheets and/or the light-emitting element and even the collimation optic and even the optional redirection optic being sandwiched between said interlayer sheet and the rear or front other interlayer sheet.

28. The luminous laminated glazed roof manufacturing process as claimed in one of claims 21 to 27, **characterized in that** it comprises creating point adhesive contact by heating between the light-emitting element and said interlayer sheet and/or said light-emitting element and another interlayer sheet.
